# EUROPÄISCHE PATENTSCHRIFT

(11) **EP 2 713 462 B1**
(45) Veröffentlichungstag und Bekanntmachung des Hinweises auf die Patenterteilung: **01.02.2017**
(21) Anmeldenummer: 12186464.9
(22) Anmeldetag: 28.09.2012
(51) Int. Cl.: H02J 3/30

(54) **Energiespeicheranlage und Modulkommunikation**
Energy storage system and module communication
Installation de stockage d'énergie et communication de module

(43) Veröffentlichungstag der Anmeldung: 02.04.2014
(73) Patentinhaber: Enrichment Technology Company Ltd., 52409 Jülich (DE)
(72) Erfinder: vor dem Esche, Rainer, 52525 Heinsberg (DE); Schäfer, Christoph, 52072 Aachen (DE); Treppmann, Christoph, 52074 Aachen (DE)
(74) Vertreter: Jostarndt Patentanwalts-AG

(56) Entgegenhaltungen:
- EP-A2- 2 267 302
- DE-A1-102008 037 575
- DE-A1-102009 020 178
- US-A1- 2004 263 116
- US-B2- 8 008 804
- SEUL-KI KIM ET AL: "Dynamic Modeling and Control of a Grid-Connected Hybrid Generation System With Versatile Power Transfer", IEEE TRANSACTIONS ON INDUSTRIAL ELECTRONICS, IEEE SERVICE CENTER, PISCATAWAY, NJ, USA, Bd. 55, Nr. 4, 1. April 2008 (2008-04-01), Seiten 1677-1688, XP011202591, ISSN: 0278-0046

## Beschreibung

### Gebiet der Erfindung

Die Erfindung bezieht sich auf eine Energiespeicheranlage, geeignet zur simultanen Ausführung von Regel- und Systemaufgaben in nicht-lokalen und lokalen Stromnetzen, auf ein Mastermodul zur Verwendung in einer solchen Energiespeicheranlage und auf ein Verfahren zum Betreiben einer solchen Energiespeicheranlage.

### Hintergrund der Erfindung

Die Energie zum Betrieb eines Stromnetzes wird von diversen unterschiedlichen Kraftwerktypen geliefert. Hierbei sind die meisten Kraftwerke, wie beispielsweise Atomkraftwerke, Kohlekraftwerke, Gaskraftwerke, Windenergie-, Biogasanlagen oder Solarkraftwerke, lediglich Energieerzeuger zur Einspeisung von Energie in das nicht-lokale Stromnetz. Nicht-lokale Stromnetze sind beispielsweise Verteil- und Übertragungsnetze, wie beispielsweise in Deutschland durch Amprion, 50Hertz, Tennet und TransnetEnBW betrieben. Diese Übertragungsnetze sind Teil des europäischen Verbundnetzes. Die oben angeführten Kraftwerke können als reine Energieerzeuger keine überschüssige Energie im Bedarfsfall aus dem Stromnetz aufnehmen und speichern. Energiespeicher können dagegen zur Aufnahme und Abgabe von Energie an ein Stromnetz verwendet werden. Energiespeicher sind beispielsweise zentrale Energiespeicher, wie Pumpspeicherwerke, oder dezentrale Energiespeicher, wie beispielsweise Batterien oder Schwungradspeicher. Die Pumpspeicherwerke stellen weitgehend witterungsunabhängige und damit in der Regel immer verfügbare Energiespeicher dar. Zentrale Energiespeicher sind im Allgemeinen auf eine große Kapazität ausgelegt. Zur Bereitstellung von Regelenergie für das nicht-lokale Stromnetz sind sie aufgrund der verfügbaren Leistung geeignet, um im nicht-lokalen Stromnetz entsprechend Wirkung entfalten zu können. Pumpspeicherkraftwerke können je nach Baugröße eine Leistung von einigen 100 MW und mehr besitzen, wobei die Generatoren allerdings meist dazu ausgelegt sind, unter Volllast Strom zu produzieren und somit die volle Leistung des Pumpspeicherwerks bei entsprechendem Wirkungsgrad zeitnah nutzen zu können. Diese Betriebsweise ist nicht dafür geeignet, die Netzqualität in einem kleinen lokalen Stromnetz mit einem im Vergleich zur Kapazität des Pumpspeicherkraftwerks eher vernachlässigbarem Strombedarf zu stabilisieren oder zu verbessern.

Zentral genutzte Batteriespeicheranlagen sind im Aufbau mit dem Ziel, einen Pilotbetrieb für Netzstabilisierende (ortsungebundene) Aufgaben (Regelenergie) zu realisieren. Die bisher geplanten erfüllen jedoch keine ortsgebundenen Aufgaben. Grundsätzlich sind Batteriespeicher jedoch aufgrund ihrer immanenten Zusammenhänge zwischen Leistung, Kapazität und Alterung für derartige Anwendungen mit mehreren Lastzyklen pro Tag nicht gut geeignet. und degradieren schnell aufgrund von Temperatureinflüssen, Systemausfällen und Fehlbedienung. Daher sind Batteriespeicher sehr wartungsintensiv. Außerdem stellen Batteriespeicher wegen ihres hohen Brand- und Chemierisiko eine Umwelt- und/oder Wassergefährdung dar, die einen enormen Absicherungsaufwand erfordern.

Dezentrale Energiespeicher sind im Allgemeinen optimiert für die Stabilisierung des lokalen Strombedarfs und für die Lieferung von Regelenergie zur Stützung des nicht-lokalen Stromnetzes nicht ausgelegt und nicht qualifiziert. Solche Anlagen können nicht zur Bedarfsdeckung für alle Stromnetze beitragen. Eine Verschaltung der dezentralen Speicher zu einer nicht-lokal und lokal wirkenden Anlage erfolgt bisher nicht.

US 8,008,804 B2 offenbart ein Verfahren zur Regelung der Wechselspannung in einem Wechselspannungs-Verteilungsnetz, wobei dazu ein Energiespeichersystem FESS an ein Verteilungsnetz als überregionales Übertragungsnetz angeschlossen ist und ein oder mehrere Schwungradenergiespeicher umfasst. Das Energiespeichersystem wird dabei ausschließlich zur Frequenzregulierung im Verteilungsnetz mittels Energieeinspeisung oder Energieabgabe verwendet.

US 2004/263116 A1 offenbart ein intelligent verteiltes Energiespeichersystem für ein Energiemanagement. Das System kann Energie nahe am Verbraucher oder am Produktionsort für den Verbrauch speichern. Die Speicherknoten können dabei mit einer zentralen Freigabeeinheit kommunizieren, um zu verhandeln, ob die Knoten Energie speichern, einem Verbraucher liefern oder die Energie zurück ins Verteilungsnetz einspeisen sollen. Die Entscheidung hängt dabei vom Energiebedarf und den Energiepreisen ab.

DE 10 2009 020178 A1 offenbart ein System zum Speichern von elektrischer Energie beschrieben. Das beschriebene Energiespeichersystem weist auf einen ersten Energiespeicher mit einer ersten Steuereinheit zum Steuern des Betriebs und Überwachen des Zustandes des ersten Energiespeichers, einen zweiten Energiespeicher mit einer zweiten Steuereinheit zum Steuern des Betriebs und Überwachen des Zustandes des zweiten Energiespeichers, und übergeordnete Steuereinheit zum Steuern des Betriebs und Überwachen des Zustandes einer Gesamtheit von Energiespeichern, welche den ersten Energiespeicher und den zweiten Energiespeicher umfasst. Es wird ferner ein Kraftfahrzeug mit einem derartigen System zum Speichern von elektrischer Energie beschrieben. Außerdem wird ein Verfahren zum Herstellen eines derartigen Energiespeichersystems beschrieben.

Es wäre daher wünschenswert, eine effektive Energiespeicheranlage zur Verfügung zu haben, die es ermöglicht, bedarfsgemäß gleichzeitig eine Verbesserung von lokaler Netzqualität und die Versorgungssicherheit für nicht-lokale Stromnetze erreichen zu können und somit als Energiespeichersystem mit genügender Wirkung für beide Zwecke betrieben werden kann.

### Zusammenfassung der Erfindung

Es ist eine Aufgabe der vorliegenden Erfindung, eine effektive Energiespeicheranlage bereitzustellen, die es ermöglicht, bedarfsgemäß gleichzeitig eine Verbesserung von lokaler Netzqualität und die Versorgungssicherheit für nicht-lokale Stromnetze erreichen zu können.

Diese Aufgabe wird gelöst durch eine Energiespeicheranlage mit den Merkmalen des Anspruchs 1.

Durch den Einsatz der Energiespeicheranlage als dezentraler Zwischenspeicher mit jeweiligen Anschlüssen an lokale und/oder nicht-lokale Stromnetze kann die lokale Netzqualität durch ortsgebundene Regel- und Systemaufgaben vor Ort verbessert werden, und gleichzeitig wird für nicht-ortsgebundene Regel- und Systemaufgaben dem nicht-lokalen Stromnetz positive Energie (Einspeisung in das Netz) oder negative Energie (Abnahme von Energie aus dem Netz) zur Stromnetzregelung bereitgestellt. Durch die gleichzeitige Verarbeitung ortsgebundener und nicht-ortsgebundener Aufgaben und die entsprechende simultane Steuerung aller angeschlossenen Stromnetze können die Bedürfnisse in angeschlossenen lokalen und nicht-lokalen Stromnetzen gleichzeitig und effizient erfüllt werden. Ferner kann die Anlagenspeicherkapazität und Anlagenleistung durch die Kombination von ortsgebundenen und nicht-ortsgebundenen Bedürfnissen effektiv ausgenutzt werden (effektive Energiespeicheranlage) und hilft somit, Ressourcen zu sparen. Durch den modularen Aufbau mit einem Mastermodul, das die Energiespeicheranlage steuert, und der Möglichkeit, Slave-Module einer beliebigen Anzahl je nach Bedarf an das Mastermodul zu koppeln, kann die Gesamtkapazität (Anlagenkapazität) und Gesamtleistung (Anlagenleistung) der Energiespeicheranlage an die Bedürfnisse in den lokalen und/oder nicht-lokalen Stromnetzen angepasst und damit ein guter Kompromiss zwischen Betriebsaufwand und Betriebsnutzen bei der Netzqualität und der verfügbaren Regelenergie getroffen werden. Durch den modularen Aufbau kann die Energiespeicheranlage auch im späteren Betrieb je nach Bedarf erweitert oder verkleinert werden, um beispielsweise auf schwankende Bedürfnisse an Energie in den angeschlossenen Stromnetzen reagieren zu können. Somit kann die Energiespeicheranlage stets effektiv, d.h. ohne ungenutzte Überkapazität, betrieben werden. Für eine Erweiterung der erfindungsgemäßen modular aufgebauten Energiespeicheranlage muss lediglich ein neu hinzukommendes Energiespeichermodul an die Datenleitung zum Mastermodul und an die Netzanschlüsse der Energiespeicheranlage, beispielsweise an den gemeinsamen Aufschaltpunkt für die Energiespeichermodule, angeschlossen werden. In einer Ausführungsform besitzt jedes Energiespeichermodul eine eindeutige Identifikation, mit der es sich und seine Funktionen, beispielsweise die übermittelten Betriebsdaten, in der Energiespeicheranlage und Systemverbund eindeutig identifiziert kann. In einer Ausführungsform besitzen die Netzanschlüsse des Mastermoduls und der Slave-Module einen gemeinsamen Aufschaltpunkt zum Anschluss an das oder die Stromnetze. Somit ermöglicht die erfindungsgemäße Energiespeicheranlage eine schnelle und einfache Erweiterung der Gesamtspeicherkapazität und Gesamtleistung je nach Bedarf (Skalierbarkeit). Für den modularen Aufbau umfasst jedes Energiespeichermodul einen Netzanschluss, damit jedes Energiespeichermodul zu einem separaten Stromanschluss an ein oder mehrere Stromnetze geeignet ist und anlagentechnisch damit weitgehend autonom betrieben werden kann. Unter dem Begriff "Netzanschluss" wird jede elektrische Schnittstelle verstanden, die geeignet ist, mit einem Stromnetz auf zulässige Weise verbunden zu werden. Der Anschluss an das nicht-lokale Stromnetz und jeweils an ein oder mehrere lokale Stromnetze kann vom Fachmann geeignet ausgestaltet werden, wobei der Anschluss so ausgestaltet ist, dass die Stromnetze (nicht-lokales und lokale(s)) bei Bedarf unabhängig voneinander von der Energiespeicheranlage mit Energie versorgt oder aus den Stromnetzen Energie abgenommen werden kann. Die Datenleitungen zwischen den Energiespeichermodulen können jede geeignete Form besitzen. In einem Ausführungsbeispiel ist die Datenleitung als Datenbussystem, wie beispielsweise ein Canbus, ein Profibus oder als Ethernet, ausgeführt. Die Kommunikation zwischen dem Mastermodul und den verbundenen Slave-Modulen kann beispielsweise aktiv über ein Meldeprotokoll erfolgen, wobei die Slave-Module und/oder das Mastermodul zur Aussendung des Meldeprotokolls die jeweils empfangenden Energiespeichermodule mit den entsprechenden Antworten oder Reaktionen auf das Meldeprotokoll reagieren können. Die Kommunikation kann auch aufgrund direkter Anfragesignale durch die Mastersteuereinheit initiiert werden.

Hierbei kann die Energiespeicheranlage entweder jeweils direkt mit einem nicht-lokalen Stromnetz und einem oder mehreren lokalen Stromnetzen verbunden sein, oder die Energiespeicheranlage kann über ein angeschlossenes lokales Stromnetz indirekt mit einem nicht-lokalen Stromnetz verbunden sein, sofern das lokale Stromnetz Teil des nicht-lokalen Stromnetzes ist, das heißt mit dem nicht-lokalen Stromnetz verbunden ist. Ortsgebundene Regel- und Systemaufgaben sind beispielsweise die Sicherstellung der benötigten lokalen Netzspannung, die Blindleistungskompensation durch Regelung der Amplituden- und Phasenlage des Spannungssignals, das Bereitstellen einer lokalen Leistungsreserve für sich eventuell hinzuschaltende größere Stromabnehmer oder Einschaltstromspitzen und das Speichern von lokalen Energieüberschussmengen. Nicht-ortsgebundene Regel- und Systemaufgaben sind beispielsweise die Bereitstellung von primärer oder sekundärer Regelleistung. Die Regelleistung (auch Reserveleistung) gewährleistet die Versorgung von Stromkunden mit genau der benötigten elektrischen Leistung bei unvorhergesehenen Ereignissen im Stromnetz. Dazu können kurzfristig Leistungsanpassungen bei regelfähigen Kraftwerken durchgeführt werden und schnell anlaufende Kraftwerke oder Energiespeicher wie die erfindungsgemäße Energiespeicheranlage eingesetzt werden. Die primäre Regelleistung dient dazu, Ungleichgewichte zwischen physikalischem Leistungsangebot und Leistungsnachfrage mit dem Ziel der Wiederherstellung einer stabilen Netzfrequenz auszugleichen. Die sekundäre Regelleistung soll das Gleichgewicht zwischen physikalischem Stromangebot und Stromnachfrage nach dem Auftreten einer Differenz wieder herstellen, wobei im Gegensatz zur Primärregelung nur die Situation in der jeweiligen Regelzone inklusive des Stromaustausches mit anderen Regelzonen betrachtet wird. Weitere nicht-ortsgebundene Regel- und Systemaufgaben sind außerdem die Bereitstellung von Energiespeicheranlagen zur Unterstützung eines Schwarzstartes, die allgemeine Speicherung von Leistungsspitzen und die Blindleistungskompensation in dem nicht-lokalen Stromnetz. Weitere ortsgebundene oder nicht-ortsgebundene Regel- und Systemaufgaben für lokale- und/oder nicht-lokale Stromnetze sind die Bereitstellung von Redundanz (Ausfallsicherheit) bei der Stromversorgung in Kombination mit den bereits vorhandenen Energielieferanten und ein Blindleistungmanagement.

Ein Energiespeichermodul, das als Mastermodul geeignet ist, muss zumindest eine Mastersteuereinheit und eine Schnittstelle zum Empfang der externen Steuerbefehle umfassen. Sofern nur ein Energiespeichermodul aus einer Mehrzahl an Energiespeichermodulen einer Energiespeicheranlage diese Bedingungen erfüllt, ist dieses Energiespeichermodul per Ausstattung als Mastermodul vorgesehen. Erfüllen dagegen mehrere Energiespeichermodule die komponentenmäßigen Voraussetzungen, so kann eines dieser Energiespeichermodule als Mastermodul festgelegt werden. Diese Festlegung kann beispielsweise hardware- oder softwaremäßig bei der Installation der Energiespeicheranlagen vorgegeben werden. In einem anderen Ausführungsbeispiel können die geeigneten Energiespeichermodule auch selbst organisiert ein Mastermodul bestimmen. Damit ist sichergestellt, dass bei einer beliebigen Zusammenstellung von Energiespeichermodulen immer ein Energiespeichermodul die Rolle des Mastermoduls einnimmt und die Energiespeicheranlage nach Herstellung aller Anschlüsse automatisch betriebsbereit ist. Beispielsweise sind die Steuereinheiten der geeigneten Energiespeichermodule dazu ausgestaltet, ein Mastersignal nach erfolgter Inbetriebnahme auszusenden, woraufhin automatisch das Energiespeichermodul, das als erstes Energiespeichermodul das Mastersignal ausgesandt hat, das Mastermodul in der Energiespeicheranlage wird. Die anderen Energiespeichermodule werden danach automatisch zu Slave-Modulen. Der Fachmann kann im Rahmen der vorliegenden Erfindung auch andere Auswahlkriterien zur Bestimmung des Mastermoduls in den Energiespeichermodulen hinterlegen.

Hierbei bezeichnet das nicht-lokale Stromnetz ein Stromnetz, das sich überregional über sehr große Gebiete erstreckt und in dem die nicht-ortsgebundenen Regel- und Systemaufgaben durchgeführt werden. Nicht-lokale Stromnetze sind beispielsweise Übertragungsnetze (öffentliches Stromnetz). Das öffentliche Stromnetz in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. In anderen Ländern werden entsprechende Übertragungsnetze durch andere Netzbetreiber betrieben. In den Übertragungsnetzen wird die Frequenz des Stromnetzes stabil gehalten (Frequenzregulierung). Das übergeordnete europäische Verbundnetz aus den jeweiligen Übertragungsnetzen in den einzelnen Staaten ist ebenfalls als nicht-lokales Stromnetz anzusehen, wofür allerdings derzeit nur die Standards für die Regelenergie festgelegt sind. Die nicht-ortsgebundenen Regel- und Systemaufgaben werden in den jeweiligen Übertragungsnetzen durchgeführt. Als lokales Stromnetz im Sinne der Erfindung werden die Stromnetze bezeichnet, in denen die vorstehend beschriebenen ortsgebundenen Regel- und Systemaufgaben durchgeführt werden. Lokale Stromnetze sind in der Regel räumlich begrenzt, beispielsweise ein betriebsinternes Stromnetz auf einer Betriebsanlage oder ein Stromnetz innerhalb eines Hauses oder Gebäudekomplexes.

Der Begriff "Empfangen" bezeichnet alle Arten von Vorgängen, bei denen externe Daten zur Energiespeicheranlagen hin übertragen werden. Diese externen Daten sind beispielsweise Steuerbefehle, auf deren Basis die Energiespeicheranlage vom Mastermodul gesteuert wird. Die externen Daten werden von externen Systemen übermittelt, beispielsweise Steuerungssysteme des lokalen Stromnetzes für ortsgebundene Regel- und Systemaufgaben und/oder Steuerungssysteme des nicht-lokalen Stromnetzes, eine übergeordnete Verbundsteuerung oder lokale Messstellen für ortsgebundene und/oder nicht-ortsgebundene Regel- und Systemaufgaben. Diese Steuerbefehle umfassen die ortsgebundenen und nicht-ortsgebundenen Regel- und Systemaufgaben, die von der erfindungsgemäßen Energiespeicheranlage im Rahmen ihrer Möglichkeiten und anderen Rahmenbedingungen ausgeführt werden. Diese Übertragung kann beispielsweise über ein Kommunikationsnetzwerk erfolgen. Die Energiespeicheranlage umfasst eine oder mehrere Schnittstellen zum Empfangen der externen Daten. Die Schnittstelle(n) kann/können dafür jede geeignete Schnittstelle sein. Je nach angeschlossenem Kommunikationsnetzwerk können die Schnittstellen dazu ausgebildet sein, eine Verbindung beispielsweise zu einem funkbasierten Netz, einem Mobilfunknetz, eine Hochverfügbarkeitsverbindung ein Netz nach IECG, einem kabelgebundenen Telefonnetz, einer Datenverbindung mittels der Stromkabel im Stromnetz oder einem Computernetz (beispielsweise das Internet) herzustellen. Vorteilhaft ist dabei das Vorhandensein mehrerer alternativer Schnittstellen zumindest im Mastermodul. Im Falle einer unterbrochenen Verbindung über eines der vorstehenden Netze kann das Mastermodul dazu ausgebildet sein, über eine andere Schnittstelle des Mastermoduls die Verbindung über ein alternatives Netz wieder herzustellen. Durch die Redundanz der Schnittstellen ist es möglich, über alternative Kommunikationsnetze möglicherweise wichtige Steuerbefehle dennoch zu empfangen. Mögliche Sub-Kommunikationsnetze sind dabei funkbasierte, kabelbasierte oder stromgebundene Kommunikationsnetze, wie beispielsweise über das Mobilfunknetz, über das Internet, über das normale Telefonnetz oder über eine Datenverbindung mittels der Stromkabel im Stromnetz. Die externen Daten (Steuerbefehle) können aber auch über eine Schnittstelle von einem Datenträger per Auslesen in einem entsprechenden Datenträgerlaufwerk (beispielsweise einer CD-ROM) oder über eine Datenträgerschnittstelle (beispielsweise von einem USB-Datenstick) empfangen werden. Alternativ können die externen Steuerbefehle auch per Direkteingabe über eine entsprechende Benutzerschnittstelle (Bildschirm und Tastatur) empfangen werden.

Die Energiespeicheranlage ist hier in einer Ausführungsform an ein nicht-lokales Stromnetz und an ein oder mehrere lokale Stromnetze angeschlossen. Hier werden die ortsgebundenen und nicht-ortsgebundenen Regel- und Systemaufgaben in den jeweiligen angeschlossenen Stromnetzen logisch separat ausgeführt. In einer anderen Ausführungsform ist die Energiespeicheranlage lediglich an ein oder mehrere lokale Stromnetze angeschlossen, von denen zumindest ein lokales Stromnetz mit dem nicht-lokalen Stromnetz verbunden ist. In diesem Fall werden die ortsgebundenen Regel- und Systemaufgaben in den jeweiligen lokalen Stromnetzen ausgeführt, und die nicht-ortsgebundenen Regel- und Systemaufgaben werden über das angeschlossene lokale Stromnetz, das mit dem nicht-lokalen Stromnetz verbunden ist, in dem nicht-lokalen Stromnetz ausgeführt. In gewissen Betriebszuständen, beispielsweise bei Ausfall eines oder mehrerer Stromnetze, kann eine Energiespeicheranlage aus Sicherheitsgründen auch vom nicht-lokalen Stromnetz völlig getrennt sein. Diese Trennung kann beispielsweise zeitlich beschränkt vorliegen. Dasselbe kann auch gegenüber dem oder den lokalen Stromnetzen vorkommen.

Die erfindungsgemäßen Energiespeichermodule können dabei jede geeignete Art von Energiespeichermodulen sein, die aufgrund ihrer Speichereigenschaften und Speicherparameter in der Lage sind, neben den ortsgebundenen Regel- und Systemaufgaben zusätzlich nicht-ortsgebundene Regel- und Systemaufgaben in nicht-lokalen Netzen über Bereitstellung primärer oder sekundärer Regelleistung zu übernehmen. Geeignete Energiespeichermodule sind beispielsweise lokale (dezentrale) Druckluftspeicher oder Wasserstoffspeicher in Kombination mit Brennstoffzellen, Batteriesysteme oder kinematische Energiespeicher wie beispielsweise Schwungradenergiespeicher. Die Energiespeicheranlage kann dabei lediglich ein einzelnes Energiespeichermodul oder eine Mehrzahl an Energiespeichermodulen umfassen. Als Energiespeichermodul wird die funktionelle Einheit verstanden, die an die angeschlossenen Stromnetze oder an ein internes Stromnetz der Energiespeicheranlage Energie abgeben oder aus ihm aufnehmen kann. In letzterem Fall ist das interne Stromnetz der Energiespeicheranlage an die lokalen und/oder nicht-lokalen Stromnetze angeschlossen. In einer Ausführungsform umfasst das Energiespeichermodul ein oder mehrere Schwungradenergiespeicher zur reversiblen Speicherung von Energie innerhalb des Energiespeichermoduls. Diese Speicherung ist als reversibel bezeichnet, da aus den Schwungradspeichern je nach Bedarf die als Rotationsenergie gespeicherte Energie wieder entnommen und als elektrische Energie von dem Energiespeichermodul oder der Energiespeicheranlage insgesamt in ein Stromnetz eingespeist werden kann und im umgekehrten Fall elektrische Energie aus dem Stromnetz entnommen und mechanisch in Form von Rotationsenergie in den Schwungsradspeichern gespeichert werden kann. Schwungradenergiespeicher besitzen den Vorzug, dass sie die aufzunehmenden oder abzugebenden Mengen an Energie sehr variabel und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage, oder Wasserstoffspeicheranlagen mit Wasserstofftanks mit dem brennbaren Wasserstoff als Gefahrenpotential. In Druckluftspeicheranlagen können dagegen zwar nicht-brennbare Gase zur Energiespeicherung verwendet werden, dennoch besitzen die Drucklufttanks ein Explosionspotential aufgrund des hohen Drucks in den Drucklufttanks. Somit stellen Schwungradenergiespeicher als Energiespeicheranlagen eine umweltsicherere Technologie für die Energiebereitstellung im Vergleich zu anderen Speichertechnologien dar und sind für beliebig viele Lastzyklen pro Tag gut geeignet. Bei der Energiebereitstellung wird von negativer Energiebereitstellung gesprochen, wenn Energie aus dem Stromnetz aufgenommen und im Schwungradenergiespeicher in Form von mechanischer Rotationsenergie gespeichert wird. Entsprechend wird von positiver Energiebereitstellung gesprochen, wenn aus dem Schwungradenergiespeicher in Form von mechanischer Rotationsenergie gespeicherte Energie mittels Abbremsen der Schwungräder (oder Rotoren) in das Stromnetz eingespeist wird. Hierbei ist die Fähigkeit von Schwungradspeichern, Energie innerhalb von wenigen Millisekunden zur Verfügung stellen zu können, ebenso vorteilhaft wie die Fähigkeit, die spezifizierte Leistung über einen Zeitraum von mehreren Minuten zu liefern.

Die Mastersteuereinheit bezeichnet eine Komponente in dem Energiespeichermodul, das als Mastermodul in der Energiespeicheranlage angeordnet ist, die die Energiespeicheranlage steuert, d.h., die die gewünschten Betriebszustände und Betriebsparameter einstellt und die die Energiespeicheranlage entsprechend eines Betriebsplans, der die gewünschten Betriebszustände als Funktion der Zeit enthält, steuert. Dem Betriebsplan liegen zumindest die externen Steuerbefehle bezüglich der ortsgebundenen Regel- und Systemaufgaben zugrunde, zu denen die Steuerbefehle bezüglich der nicht-ortsgebundenen Regel- und Systemaufgaben hinzukommen oder hinzukommen können. Des Weiteren ist die Mastersteuereinheit in der Lage, auf sich verändernde Verhältnisse im lokalen Stromnetz entsprechend zu reagieren und mittels Energieeinspeisung oder Energieaufnahme die Netzqualität des lokalen Stromnetzes zu erhöhen oder konstant zu halten oder bei einer Störung im lokalen Stromnetz die Netzqualität wieder zu verbessern. Die empfangenen Steuerbefehle (Anweisungen) entsprechen den ortsgebundenen und/oder nicht-ortsgebundenen Regel- und Systemaufgaben für die Energiespeicheranlage. Zusätzlich zu den Regel- und Systemaufgaben im lokalen Stromnetz kann die Mastersteuereinheit Befehle, Anweisungen etc. von einer externen (nicht-lokalen) Steuereinheit für das nicht-lokale Stromnetz empfangen und diese Befehle oder Anweisungen parallel zu den ortsgebundenen Regel- und Systemaufgaben ausführen. Der Begriff "ausführen" bezeichnet hierbei das Steuern der Energiespeicheranlage durch die Mastersteuereinheit gemäß den vorliegenden Steuerbefehlen zu den ortsgebundenen und nicht-ortsgebundenen Regel- und Systemaufgaben für die angeschlossenen Stromnetze. Die externe (nicht-lokale) Steuereinheit regelt dabei den Bedarf von Regelenergie für das nicht-lokale Stromnetz und kann diesen Bedarf im Rahmen der freien (nicht für ortsgebundenen Regel- und Systemaufgaben benötigte) Kapazitäten der Energiespeicheranlagen in Form von nicht-ortsgebundenen Regel- und Systemaufgaben von der Energiespeicheranlage über das Kommunikationsnetz anfordern. Weitere externe Systeme, von denen die Energiespeicheranlage nicht-ortsgebundene Regel- und Systemaufgaben empfangen könnte, wären beispielsweise ein Leistungsstützungsverbund oder eine Strombörse, anhand derer Einspeisungen oder Energieabnahmen in bestimmten Betriebszeiten entsprechend günstig sind. Weitere externe Größen für nicht-ortsgebundene Regel- und Systemaufgaben sind beispielsweise der Blindleistungsbedarf, eine Spitzenlastkompensation oder benötigter lokaler Speicherbedarf im nicht-lokalen Stromnetz.

In einer weiteren Ausführungsform umfasst die Mastersteuereinheit ein Prioritätenmanagement zum Ausführen der einzelnen externen Steuerbefehle, wobei die Ausführung der externen Steuerbefehle bezüglich ortsgebundener Regel- und Systemaufgaben in dem oder den lokalen Stromnetzen Vorrang vor der Ausführung der externen Steuerbefehle bezüglich nicht-ortsgebundener Regel- und Systemaufgaben in dem nicht-lokalen Stromnetz besitzt. Das Prioritätenmanagement kann als Datenspeicher ausgeführt sein, auf den die Mastersteuereinheit vor Ausführung der externen Steuerbefehle zurückgreift und die gemäß den gesetzten Prioritäten die nächsten externen Steuerbefehle ausführt. Die Prioritäten können dabei gegenüber einem externen Zugriff unveränderlich auf dem Datenspeicher gespeichert sein. Eine Änderung der Prioritäten kann beispielsweise durch Austausch des entsprechenden Datenspeichers oder der entsprechenden Datei mit dem Prioritätenmanagement vor Ort im Energiespeichermodul möglich sein. Bei einer einzigen Energiespeicheranlage ist die freie Kapazität entweder ausreichend, um die nicht-ortsgebundenen Regel- und Systemaufgaben im Normalfall zu erfüllen oder die zusätzliche Kapazität, die für ortsgebundenen Regel- und Speicheraufgaben reserviert ist, würde als mögliche Reserve im Ausnahmefall zur Lösung des Netzproblems nicht ausreichen. Insofern basiert der Vorrang der ortsgebundenen Regel- und Systemaufgaben auf den endlichen Anlagenspeicherkapazitäten und Anlagenleistungen. Sind dagegen mehrere Energiespeicheranlagen an das nicht-lokale Stromnetz angeschlossen, könnte der Regelbedarf im nicht-lokalen Stromnetz auch von anderen Energiespeicheranlagen gedeckt werden, da damit auf eine ausreichende freie Anlagenspeicherkapazität und Anlagenleistung zurückgegriffen werden kann, ohne dass dafür die ortsgebundenen Regel- und Systemaufgaben vernachlässigt oder gar missachtet werden müssten. Eine Energiespeicheranlage mit jeweils zehn Energiespeichermodulen entspricht 1,4 MWh. Zwanzig Energiespeicheranlagen entsprechen somit im Systemverbund als ein gemeinsames Energiespeichersystem 28 MWh. Lokal reserviert sind beispielsweise jeweils 1 MWh pro Energiespeicheranlage. Dies ergibt eine verfügbare Kapazität des Energiespeichersystems für nicht-ortsgebundene Aufgaben von 8 MWh. Dabei wären gleichzeitige Anforderungen an die Bereitstellung von weiterer Leistung zusätzlich zu betrachten und gegebenenfalls zu berücksichtigen.

In einer weiteren Ausführungsform ist die Mastersteuereinheit bei einem gestörten Empfang der externer Steuerbefehle dazu vorgesehen, über die Modulspeicherkapazitäten und Modulleistungen aller mit ihr verbundenen Energiespeichermodule ausschließlich zur Ausführung der Steuerbefehle bezüglich der auszuführenden ortsgebundenen Regel- und Systemaufgaben in dem oder den angeschlossenen lokalen Stromnetzen zu verfügen, bis der Empfang externer Steuerbefehle wieder hergestellt ist. Zur Feststellung einer Störung kann dabei das Mastermodul periodisch Testsignale nach extern aussenden und das Fehlen eines entsprechenden Rücksignals als Verifikation einer Störung des Empfangs verarbeiten. Ein solches Testsignal ist beispielsweise ein so genannter digitaler Handschlag, über den das Bestehen der Kommunikationsverbindung geprüft wird. Hierzu sendet die Mastersteuereinheit ein Datenpaket zu einem externen angeschlossenen System aus und erhält als Reaktion über das Kommunikationsnetzwerk daraufhin ein entsprechendes Datenpaket (Rückantwort) zurück übermittelt. Die erfolgte Absendung und erhaltene Rückantwort wird von der Mastersteuereinheit protokolliert und auf einem geeigneten Datenspeicher abgespeichert, beispielsweise auf einem Server. Bei andauerndem unterbrochenem Empfang könnten sich Randbedingungen für und damit auch die nicht-ortsgebunden Regel- und Systemaufgaben ändern. Daher beschränkt sich die Mastersteuereinheit bei gestörtem Empfang externer Steuersignale auf die Ausführung ortsgebundener Regel- und Systemaufgaben. Die Bevorzugung ortsgebundener Regel- und Systemaufgaben ist vorteilhaft, da nach einem Ausfall der Kommunikation nach extern die Mastersteuereinheit keine Rückmeldung mehr über den augenblicklichen Zustand des nicht-lokalen Stromnetzes bekommt. Sofern die Mastersteuereinheit einfach die vorliegenden Aufgaben ohne weitere zu empfangende externe Steuersignale abarbeiten würde, könnte dies in besonderen Umständen sogar zu einem Ausfall des Stromnetzes infolge von Überlastung führen. Daher ist es vorteilhaft, nur die ortsgebundenen Regel- und Systemaufgaben durchzuführen, zu denen die Energiespeicheranlage verpflichtet ist und der die Zweckmäßigkeit dieser ortsgebundenen Aufgaben gegebenenfalls über eigene Messeinheiten selbst überwachen kann. Die ortsgebundenen Aufgaben können gegebenenfalls vor Ort über Änderungen im Aufgabenspeicher veranlasst werden. Für das nicht-lokale Stromnetz kann dieses so nicht durchgeführt werden, da die Bedürfnisse des nicht-lokalen Stromnetzes auch von den Eingriffen anderer Kraftwerke, Verbraucher- oder Speicheranlagen abhängen, über die die erfindungsgemäße Energiespeicheranlage selber im Falle einer gestörten Kommunikation keine Übersicht hat.

In einer weiteren Ausführungsform umfasst das Mastermodul eine erste Prüfeinheit, die dazu vorgesehen ist, die empfangenen externen Steuerbefehle auf Plausibilität und/oder Herkunft zu überprüfen und der Mastersteuereinheit ein positives oder negatives erstes Prüfergebnis zu übermitteln, bevor die Mastersteuereinheit die empfangenen externen Steuerbefehle speichert. Damit wird verhindert, dass Unbefugte Zugriff auf den Anlagen- oder Modulkern, sprich die Mastersteuereinheit, bekommen können. Dies trägt zur Betriebssicherheit der Energiespeicheranlage gegenüber der Außenwelt und zur Versorgungssicherheit bei. Die Herkunft kann beispielsweise bei den empfangenen nicht-ortsgebundenen und ortsgebundenen Regel- und Systemaufgaben Teil des empfangenen Datenpakets sein und entsprechend von der ersten Prüfeinheit ausgelesen und mit der erwarteten Datenstruktur der Herkunftsbezeichnung verglichen werden. Hierbei kann die Herkunft beispielsweise als Hash-Wert übermittelt und von der ersten Prüfeinheit mit den in der ersten Prüfeinheit vorliegenden Hash-Werten für die zugelassenen Datenquellen für nicht-ortsgebundene und ortsgebundene Regel- und Systemaufgaben verglichen werden. Bei Gleichheit des vorhandenen mit dem empfangenen Hash-Wert ist die zulässige Herkunft festgestellt. Die nicht-ortsgebundenen und ortsgebundenen Regel- und Systemaufgaben könnten auch verschlüsselt übermittelt werden, wobei der Entschlüsselungs-Schlüssel für die jeweilige Herkunft charakteristisch ist. Können die nicht-ortsgebundenen und ortsgebundenen Regel- und Systemaufgaben mit einem Entschlüsselungs-Schlüssel entschlüsselt werden, so ist dieser Entschlüsselungs-Schlüssel charakteristisch für die Herkunft der empfangenen Daten. Die Plausibilität der empfangenen Daten kann beispielsweise auch dadurch negativ überprüft werden, dass die ortsgebundenen und nicht-ortsgebundenen Regel- und Systemaufgaben keine Aufgaben darstellen, deren Erfüllung durch die Anlagenspeicherkapazität und Anlagenleistung nicht möglich ist oder die Aufgaben vom Datenformat her unsinnige Daten enthalten. Eine Plausibilitätsprüfung kann dabei beispielsweise eine Prüfsummenbildung, ein Datensummenprüfung und/oder eine Verschlüsselung mit anschließender erfolgreicher Entschlüsselung umfassen.

In einer bevorzugten Ausführungsform ist die Mastersteuereinheit dazu vorgesehen, bei einem negativen ersten Prüfergebnis für die empfangenen externen Steuerbefehle alle Energiespeichermodule der Energiespeicheranlage in einen sicheren Betriebszustand zu steuern. Somit reagiert die Energiespeicheranlage bei einem unberechtigten Zugriffsversuch auf die Energiespeicheranlage in Form von Regel- und Systemaufgaben unbekannter Herkunft oder verdächtigem Inhalt in einer selbstsichernden Form. Ein sicherer Betriebszustand ist beispielsweise das Stoppen der Ausführung aller Regel- und Systemaufgaben und das Versetzen der Energiespeicheranlage in einen passiven Modus (keine Energieabgabe oder Energieaufnahme nach/von außen oder ein durchgeführter interner Lastabwurf). Dieser Modus kann beispielsweise beibehalten werden, bis die nächsten externen Steuersignale mit einem positiven ersten Prüfergebnis auf Herkunft und Inhalt empfangen wurden. Ein weiterer sicherer Betriebszustand wäre das Stromlosschalten der Energiespeicheranlage. In einer bevorzugten Ausführungsform trennt die Mastersteuereinheit die Netzanschlüsse aller Energiespeichermodule von den angeschlossenen Stromnetzen. In einer weiteren Ausführungsform sendet die Mastersteuereinheit ein Alarmsignal an die Energiespeicheranlage und/oder nach extern über eine der Schnittstellen aus. In Reaktion auf das Alarmsignal und die erfolgte Netztrennung kann die Mastersteuereinheit beispielsweise versuchen, über ein Kommunikationsnetzwerk eine Verbindung aufzubauen, um neue nicht-ortsgebundenen und/oder ortsgebundene Regel- und Systemaufgaben zu empfangen, deren Herkunft und Inhalt einwandfrei sind. Liegen die einwandfreien externen Steuerdaten dann wieder vor, kann die Mastersteuereinheit die Energiespeicheranlage wieder aus dem sicheren Betriebszustand in den Normalbetrieb überführen, gegebenenfalls werden die Netzanschlüsse wieder hergestellt.

In einer weiteren Ausführungsform umfassen die Slave-Module jeweils Slave-Steuereinheiten, die dazu ausgebildet sind, Betriebszustände des jeweiligen Slave-Moduls zu überwachen und zu steuern und dem Mastermodul Betriebsdaten des Slave-Moduls, beispielsweise umfassend die nicht für die ortsgebundenen Regel- und Systemaufgaben benötigten Modulspeicherkapazität und die Modulleistung über die Datenleitung, zu übermitteln. Durch die Ausstattung der Slave-Module mit eigenen Slave-Steuereinheiten braucht die Mastersteuereinheit nicht direkt in die Maschinenfunktionen der Slave-Module zur Ausführung externer Steuerbefehle (Ausführung der Regel- und Systemaufgeben) einzugreifen. Hier kann die Mastersteuereinheit beispielsweise modulabhängige Regel- und Systemaufgaben übermitteln, die durch die Slave-Steuereinheiten dann in die entsprechenden Maschinenparameter umgesetzt werden. Dadurch kann der Steuerungsaufwand für die Mastersteuereinheit verringert und damit vereinfacht werden. Durch die Ausrüstung der Slave-Module mit Slave-Steuereinheiten ist der Aufwand gering, weitere Slave-Module zusätzlich in eine Energiespeicheranlage zu integrieren, da die Maschinenparameter der hinzukommenden Slave-Module nicht in die Mastersteuereinheit einprogrammiert werden müssen, sondern separat von der Mastersteuereinheit selbständig durch die Slave-Steuereinheiten gesteuert werden. Die Betriebszustände werden in den einzelnen Slave-Modulen direkt durch die Slave-Steuereinheit gemessen, wodurch der Aufwand für Steuerungsleitungen auf das jeweilige Energiespeichermodul begrenzt und damit der Anlagenaufwand verringert wird. Die Slave-Steuereinheiten können die Betriebszustände auswerten und daraus geeignete Betriebsdaten zur Übermittlung an die Mastersteuereinheit erstellen. Diese Übermittlung kann beispielsweise periodisch (typ. Taktraten < 100ms) erfolgen oder jeweils bei Änderung eines Betriebszustands oder einer Über- oder Unterschreitung eines Betriebsparameters.

In einer weiteren Ausführungsform umfasst das Mastermodul eine zweite Prüfeinheit, die dazu vorgesehen ist, die von den Slave-Modulen übermittelten Betriebsdaten auf Plausibilität und/oder Herkunft zu überprüfen und der Mastersteuereinheit ein positives oder negatives zweites Prüfergebnis zu übermitteln, bevor die Mastersteuereinheit die übermittelten Betriebsdaten speichert. Durch diese Maßnahme wird ein zusätzlicher, Anlagen-interner Schutz eingebaut, der verhindert, dass Unbefugte, die sich Zutritt/ Zugriff zu einzelnen Modulen oder auf die Datenverbindung verschafft haben, indirekt auch auf die Mastersteuereinheit und damit auf die Gesamtanlage Zugriff bekommen können. Ein unbefugter Zugriff könnte der Mastersteuereinheit falsche Betriebszustände vermitteln, woraufhin die Mastersteuereinheit nach extern falsche Energieanlagenparameter aussendet und entsprechend falsch dimensionierte externe Steuerbefehle übermittelt bekommt, was gegebenenfalls die Netzsicherheit gefährdet. Außerdem könnte die Mastersteuereinheit den Slave-Modulen falsche Anweisungen zur Ausführung der externen Steuerbefehle übermitteln, was gegebenenfalls die Energiespeichermodule beschädigen könnte. Die zweite Prüfeinheit trägt über die Prüfung der Betriebsdaten somit zur Betriebssicherheit der Energiespeicheranlage intern und gegenüber der Außenwelt und zur Versorgungssicherheit bei. Die Herkunft bei den empfangenen übermittelten Betriebsdaten kann beispielsweise Teil des empfangenen Datenpakets sein und entsprechend von der zweiten Prüfeinheit ausgelesen und mit der erwarteten Datenstruktur der Herkunftsbezeichnung verglichen werden. Hierbei kann die Herkunft beispielsweise als Hash-Wert übermittelt und von der zweiten Prüfeinheit mit den in der zweiten Prüfeinheit vorliegenden Hash-Werten für die einzelnen Slave-Module verglichen werden. Bei Gleichheit des vorhandenen mit dem empfangenen Hash-Wert ist die zulässige Herkunft festgestellt. Die Betriebsdaten könnten auch verschlüsselt übermittelt werden, wo der Entschlüsselungs-Schlüssel für die jeweilige Herkunft charakteristisch ist. Können die Betriebsdaten mit einem Entschlüsselungs-Schlüssel entschlüsselt werden, so ist dieser Entschlüsselungs-Schlüssel charakteristisch für die Herkunft der übermittelten Betriebsdaten. Die Plausibilität der übermittelten Betriebsdaten kann beispielsweise dadurch überprüft werden, dass die Betriebsdaten eine sprunghafte Änderung zeigen, die aus der Historie und aus dem bis dahin geltenden Betriebszustand nicht zu erwarten wäre. Eine Plausibilitätsprüfung kann auch prüfen, ob die Betriebsdaten sinnvolle Werte im Rahmen der Anlagenspeicherkapazität und Anlagenleistung darstellen und ob ein gültiges Datenformat übermittelt wurde.

In einer weiteren Ausführungsform ist die Mastersteuereinheit dazu vorgesehen, bei einem negativen zweiten Prüfergebnis für die übermittelten Betriebsdaten eines bestimmten Slave-Moduls dieses Slave-Modul in einen sicheren Betriebszustand zu steuern. Hier gilt bezüglich des sicheren Betriebszustands das gleiche wie vorstehend im Rahmen des ersten Prüfergebnisses beschrieben. In einer bevorzugten Ausführungsform trennt die Mastersteuereinheit die Netzanschlüsse dieses Slave-Moduls von den angeschlossenen Stromnetzen. Dazu ist die Mastersteuereinheit über entsprechende Datenverbindungen mit jedem Netzanschluss eines jeden Slave-Moduls verbunden, und die Netzanschlüsse der Slave-Module sind elektronisch schaltbar ausgeführt. In einer weiteren Ausführungsform sendet die Mastersteuereinheit ein Alarmsignal an die Energiespeicheranlage und/oder nach extern über eine der Schnittstellen aus. In Reaktion auf das Alarmsignal und die erfolgte Netztrennung des betreffenden Slave-Moduls kann die Mastersteuereinheit beispielsweise versuchen, erneut Betriebsdaten von diesem Slave-Modul übermittelt zu bekommen, deren Herkunft und Inhalt einwandfrei sind. Liegen die einwandfreien Betriebsdaten dann wieder vor, kann die Mastersteuereinheit das betreffende Slave-Modul wieder aus dem sicheren Betriebszustand in den Normalbetrieb überführen, gegebenenfalls wird der Netzanschluss des Slave-Modul wieder hergestellt.

In einer weiteren Ausführungsform umfasst das Slave-Modul ebenfalls eine Schnittstelle zum Empfangen externer Steuerbefehle bezüglich der auszuführenden ortsgebundenen und nicht-ortsgebundenen Regel- und Systemaufgaben, und die Slave-Steuereinheit ist zum Speichern der externen Steuerbefehle und zur Steuerung der anderen Slave-Module als neue Mastersteuereinheit bei Ausfall des bisherigen Mastermoduls oder der bisherigen Mastersteuereinheit ausgebildet. Indem das Slave-Modul ebenfalls externe Steuerbefehle empfangen kann, ist es zur Gesamtsteuerung der Energiespeicheranlage ebenfalls geeignet. Dadurch wird eine Redundanz bei der Führung (Steuerung) der Energiespeicheranlage bereitgestellt, so dass die Betriebssicherheit und Verfügbarkeit der Energiespeicheranlage auch bei Ausfall der Mastersteuereinheit gewährleistet ist. Über die Datenleitung(en) ist nicht nur die Mastersteuereinheit mit allen Slave-Steuereinheiten verbunden, sondern alle Slave-Steuereinheiten sind ebenfalls alle gegenseitig miteinander verbunden (Maschennetz). Somit kann eine Slave-Steuereinheit jederzeit in gleicher Weise die Steuerung der Energiespeicheranlage ersatzweise übernehmen. In einer bevorzugten Ausführungsform ist die Mastersteuereinheit dazu vorgesehen, eine Hierarchiefolge aufzustellen und diese den Slave-Modulen zu übermitteln, nach der die Slave-Steuereinheiten beim Ausfall des bisherigen Mastermoduls oder der bisherigen Mastersteuereinheit die Steuerung der anderen Slave-Module übernehmen. Mit der Hierarchiefolge kann sofort das bestimmte Slave-Modul mit der Steuerung der Energiespeicheranlage als neues Mastermodul fortfahren. Damit wird die Anlagenverfügbarkeit und Sicherheit bei teilweisen Störungen innerhalb der Energiespeicheranlage weiter gewährleistet.

In einer weiteren Ausführungsform überprüft die Mastersteuereinheit die Datenleitung zu den Slave-Modulen auf deren Funktionstüchtigkeit mittels eines an die Slave-Module periodisch ausgesendeten, so genannten Handschlagsignals, und die Slave-Module sind dazu vorgesehen, aufgrund des empfangenen Handschlagsignals ein für das jeweilige Slave-Modul charakteristisches Rücksignal zur Mastersteuereinheit zu übermitteln, und die Mastersteuereinheit ist dazu vorgesehen, aufgrund des empfangenen Rücksignals die Funktionstüchtigkeit der Datenleitung zu den jeweiligen Slave-Modulen festzustellen. Das Fehlen eines entsprechenden Rücksignals innerhalb eines voreingestellten Zeitfensters dient als Verifikation einer gestörten Verbindung zu den Slave-Modulen. Hierzu sendet beispielsweise die Mastersteuereinheit ein Slave-Modul spezifisches Datenpaket an die jeweiligen Slave-Modulen aus, die entsprechende Slave-Modul-spezifische Rücksignale aussenden. Das Mastermodul könnte aber auch ein allgemeines Handschlagsignal an alle Slave-module aussenden, auf dessen Empfang hin die Slave-Module die entsprechenden Slave-Modul spezifischen Rücksignale zur Mastersteuereinheit aussenden. Aus den Slave-Modul spezifischen Rücksignalen bestimmt die Mastersteuereinheit, ob zu allen Slave-Modulen eine ungestörte Datenverbindung existiert und für den Fall, dass nicht alle Rücksignale empfangen wurden, zu welchen Slave-Modulen eine gestörte Datenverbindung vorliegt. Die erfolgte Absendung des Handschlagsignals und die erhaltenen Rücksignale werden von der Mastersteuereinheit protokolliert und auf einem geeigneten Datenspeicher abgespeichert, beispielsweise auf einem Server. Die Feststellung einer bestehenden Datenleitung ist wichtig, damit die Mastersteuereinheit sicherstellen kann, dass die an die Slave-Module übermittelten Steuerbefehle zur Ausführung der Regel- und Systemaufgaben tatsächlich von den Slave-Modulen empfangen und umgesetzt werden können. Anderenfalls wäre eine Ausführung der externen Steuerbefehle zur Sicherung der Netzqualität und Bereitstellung der Regelleistung nicht gewährleistet. In einer bevorzugten Ausführungsform ist das Mastermodul dazu vorgesehen ist, bei fehlender Funktionstüchtigkeit der Datenleitung zu allen Slave-Modulen zumindest die Netzanschlüsse des Mastermoduls von den jeweiligen Stromnetzen zu trennen. In einer weiteren Ausführungsform trennt die Mastersteuereinheit zusätzlich alle Netzanschlüsse aller Slave-Module von den angeschlossenen Stromnetzen. Dazu ist die Mastersteuereinheit über entsprechende Datenverbindungen mit jedem Netzanschluss eines jeden Slave-Moduls verbunden, und die Netzanschlüsse der Slave-Module sind elektronisch schaltbar ausgeführt. In einer anderen Ausführungsform ist das Slave-Modul dazu vorgesehen ist, bei fehlendem Empfang des Handschlagsignals die Netzanschlüsse des Slave-Moduls von den jeweiligen Stromnetzen zu trennen. Bei einer periodischen Aussendung des Handschlagsignals an die Slave-Module ist den Slave-Steuereinheiten bekannt, nach welchem Zeitintervall ein neues Handschlagsignal zu erwarten ist. Diese Periode kann vom Fachmann geeignet gewählt werden, beispielsweise wird das Handschlagsignal mit einem Takt im Sekundenbereich ausgesendet. Sollten mehrere Perioden ohne Handschlagsignal verstrichen sein, geht das Slave-Modul in einem sicheren Betriebszustand über, und die Slave-Steuereinheit trennt das Slave-Modul von den angeschlossenen Stromnetzen, um eine Gefährdung des Stromnetzes, beispielsweise durch Überlastung, zu vermeiden, da das Slave-Modul bei gestörter Kommunikation mit der Mastersteuereinheit keine aktuellen Information über den Bedarf in den angeschlossenen Stromnetzen mehr besitzt und der vorherige Betriebszustand eventuell nun nicht mehr notwendig oder gar kritisch für die angeschlossenen Stromnetze wäre.

In einer weiteren Ausführungsform ist die Energiespeicheranlage über eine Regeleinheit an das eine oder die mehreren lokalen Stromnetze und an das nicht-lokale Stromnetz angeschlossen, wobei die Regeleinheit dazu ausgestaltet ist, einen Energiefluss zwischen den angeschlossenen Stromnetzen und der Energiespeicheranlage zu regeln. Wären die lokalen und nicht-lokalen Stromnetze lediglich mit dem Aufschaltpunkt der Energiespeicheranlage verbunden, so würde die von der Energiespeicheranlage eingespeiste Energie nur in das Stromnetz eingespeist werden, das den größeren Energiebedarf hat. Hiermit könnte aber nicht mehr gezielt lokal und nicht-lokal gemäß einer Aufgabenverteilung geregelt werden. Gegenwärtige Energiespeicher sind typischerweise über einen Schalter mit einem einzigen Stromnetz verbunden. Hier würde die vorstehende Steuerung des Energieflusses entfallen, und der Schalter bräuchte lediglich bei einem Netzausfall geöffnet zu werden. In der vorliegenden Erfindung ist die Regeleinheit dagegen derart ausgestattet, dass nach Abtrennen des einen Stromnetzes die anderen angeschlossenen Stromnetze weiterhin wie gewünscht mit Energie versorgt werden oder aus diesen Energie aufgenommen werden kann, da die Energiespeicheranlage im Rahmen der vorliegenden Erfindung simultan eine Mehrzahl an getrennten Stromnetzen versorgen muss. Die Regeleinheit steuert den Energiefluss zu den angeschlossenen Netzen in der von der Steuerung vorgesehenen Weise. In einer bevorzugten Ausführungsform ist die Regeleinheit außerdem dazu vorgesehen, ein oder mehrere der angeschlossenen Stromnetze im Bedarfsfall von der Energiespeicheranlage zu trennen. Sollte eines der angeschlossenen Stromnetze ausfallen, so trennt die Regeleinheit dieses Stromnetz unter Umständen sofort innerhalb weniger Millisekunden von der Energiespeicheranlage, damit diese weiterhin für die anderen Stromnetze betriebsbereit bleibt. Ansonsten würde gegebenenfalls ein Kurzschluss oder eine Überlastsituation eintreten. In einer weiteren Ausführungsform umfasst die Regeleinheit dazu eine Regelbox mit mindestens einem Regelglied und einen oder mehrere Trennschalter, die durch das Regelglied gesteuert werden und deren Anzahl von der Anzahl der an die Regeleinheit angeschlossenen Stromnetze abhängt. Die Regelbox ist dabei direkt oder über die Regeleinheit mit der Steuereinheit über eine Datenleitung verbunden, über die die Steuereinheit die Konfigurationsdaten der Regelfunktion an das Regelglied übertragen kann.

Die Erfindung betrifft des Weiteren ein Mastermodul mit den Merkmalen des Anspruchs 13.

In einer Energiespeicheranlage mit nur lediglich einem Mastermodul entsprechen die Anlagenspeicherkapazitäten und die Anlagenleistung der Modulspeicherkapazität und der Modulleistung des Mastermoduls. Ein Mastermodul stellt eine autarke Anlage dar, die in einer Ausführungsform alleine für sich als Energiespeicheranlage in Betrieb genommen werden kann. Bei mehreren Energiespeichermodulen addieren sich die einzelnen Kapazitäten und Leistungen zu der Anlagenspeicherkapazitäten und der Anlagenleistung.

In einer Ausführungsform umfasst zumindest das Mastermodul eine oder mehrere Messeinheiten zur Messung einzelner oder mehrerer relevanter Daten in den jeweiligen angeschlossenen Stromnetzen, und die Mastersteuereinheit ist dazu vorgesehen, die Steuerung des Mastermoduls und der gegebenenfalls vorhandenen Slave-Module für die ortsgebundenen Regel- und Systemaufgaben anhand der externen Steuersignale in diesen lokalen und nicht-lokalen Stromnetzen auf Basis der gemessenen relevanten Daten auszuführen. Die Messeinheiten können dabei im lokalen und/oder nicht-lokalen Stromnetz integriert oder an einer oder mehreren Stellen am lokalen Stromnetz angeordnet sein. Die Messeinheiten können auch am Verbindungspunkt zwischen der Energiespeicheranlage und den lokalen und/oder nicht-lokalen Stromnetzen angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, der Phasenwinkel, der Sternpunkt, die Netzfrequenz, der Netzstrom und andere Größen. Der Fachmann kann im Rahmen der vorliegenden Erfindung geeignete Messeinheiten oder Messsonden auswählen und an der geeigneten Position anordnen. Sei beispielsweise die gewünschte Netzfrequenz 50 Hz und stellen die Messeinheiten ein Absinken der Netzfrequenz fest, so wird die Mastersteuereinheit automatisch auf Basis der aktuellen gemessenen Netzfrequenz (als gemessene relevante Daten) und einer in der Steuereinheit hinterlegten Reaktionsfolge Energie in das lokale Stromnetz einspeisen (ortsgebundene Regel- und Systemaufgabe), bis die Netzfrequenz wieder auf dem gewünschten Wert liegt. Weitere Beispiele sind die Messung des Phasenwinkels im lokalen Stromnetz, um die entsprechende Bildleistungskompensation bereitzustellen, oder die Spannungsmessung im Falle von zu viel oder zu wenig Lastabnahme im lokalen Netz zum Erhalt der Spannungsqualität. Für andere Regel- und Systemaufgaben sind entsprechende andere Reaktionsfolgen in der Mastersteuereinheit hinterlegt.

In einer weiteren Ausführungsform umfasst das Mastermodul einen Aufgabenspeicher zur Speicherung der empfangenen externen Steuerbefehle bezüglich der nicht-ortsgebundenen und ortsgebundenen Regel- und Systemaufgaben, auf den die Mastersteuereinheit zur Steuerung der Energiespeicheranlage gemäß der nicht-ortsgebundenen und ortsgebundenen Regel- oder Systemaufgaben zugreift. Der Aufgabenspeicher kann ein geeigneter Datenspeicher im Mastermodul sein. Er kann dabei als Teil der Mastersteuereinheit ausgeführt sein oder ein separater Speicher sein. In beiden Fällen ist die Mastersteuereinheit so mit dem Aufgabenspeicher über eine Datenverbindung verbunden, dass sie auf den Aufgabenspeicher jederzeit zugreifen, die darin gespeicherten nicht-ortsgebundenen und ortsgebundenen Regel- und Systemaufgaben auslesen und gemäß dieser die Energiespeicheranlage steuern kann. Der Fachmann kann im Rahmen der vorliegenden Erfindung den schaltungsstechnischen Zugriff der Mastersteuereinheit auf den Aufgabenspeicher und auf die anzusteuernden Energiespeichermodule der Energiespeicheranlage geeignet ausgestalten. Die Anweisungen (externe Steuerbefehle) zu den nicht-ortsgebundenen und ortsgebundenen Regel- und Systemaufgaben können im Aufgabenspeicher beispielsweise als Vorschrift "Speicher aus dem nicht-lokalen Stromnetz xx kWh am y.Tag ab zz Uhr" gespeichert sein. In einem anderen Beispiel könnte die Anweisung im Aufgabenspeicher als "Speise heute ab zz Uhr xx kW pro Stunde in das lokale Stromnetz ein". Das konkrete Datenformat der Anweisungen kann vom Fachmann im Rahmen der vorliegenden Erfindung geeignet gewählt werden. Diese Anweisungen (oder Aufgaben) im Aufgabenspeicher können beispielsweise eine Regelleistung oder eine Spannungs- oder Stromstabilisierung betreffen. Die Anweisungen (oder Aufgaben) können dabei mit oder ohne Zeitbezug abgespeichert werden. Eine Anweisung (oder Aufgabe) ohne Zeitbezug könnte beispielsweise "Liefere in Abhängigkeit der Stromnetzfrequenzabweichung von 50 Hz entsprechend einer Vorgabekurve die entsprechende Regelleistung" lauten.

In einer weiteren Ausführungsform ist die Mastersteuereinheit dazu ausgestaltet, Betriebsdaten der Energiespeicheranlage zu erfassen, auszuwerten und ein Meldeprotokoll, umfassend die Betriebsdaten über die Schnittstelle zu entsprechenden externen Systemen auszusenden, von denen sie die externen Steuerbefehle erhält. Damit können zumindest die Betriebsdaten für die zu empfangenden externen Steuerbefehle berücksichtigt werden. Die Betriebsdaten der Energiespeicheranlage geben beispielsweise an, welche Anlagenkapazität und Anlagenleistung vorliegt und welche (momentane) freie nicht-lokale Kapazität (die Kapazität, die nicht für die ortsgebundenen Regel- und Systemaufgaben benötigt wird) und (momentane) freie nicht-lokale Leistung (die Anlagenleistung, die nicht für die ortsgebundenen Regel- und Systemaufgaben benötigt wird) die Energiespeicheranlage für nicht-ortsgebundene Aufgaben hat und/oder welche ortsgebundenen Regel- und Systemaufgaben in Zukunft geplant sind. Die Betriebsdaten können dabei von der Mastersteuereinheit selber gemessen werden, oder die Mastersteuereinheit bekommt die Betriebsdaten von Betriebssensoren oder von den Slave-Modulen über entsprechende Datenleitungen übermittelt. Die auf diese Weise erfassten Betriebsdaten werden nach einem in der Mastersteuereinheit abgelegten Schema von der Mastersteuereinheit ausgewertet, beispielsweise durch ein entsprechendes Softwareprogramm, und als Betriebsdaten in einem vorher festgelegten Format über die vorstehend bereits beschriebenen Schnittstellen ausgesendet. Der Zeittakt für die Aussendungen beträgt beispielsweise 1 Hertz. Die Mastersteuereinheit erfasst beispielsweise die Ist-Werte der Energiemodul-Speicherzustände beziehungsweise der Speicherzustände der einzelnen Schwungradenergiespeicher, die Zustände der angeschlossenen Stromnetze (beispielsweise Spannung und Strom) und verrechnet diese Daten zur Ausführung der ortsgebundenen und nicht-ortsgebundenen Regel- und Systemaufgaben. Das Meldeprotokoll kann beispielsweise zusätzlich zu den Betriebsdaten die Identität der Energiespeicheranlage in Form einer charakteristischen Bezeichnung wie einer Kennnummer und möglicherweise den Ort, an dem die Energiespeicheranlage aufgestellt ist, in Form von Geokoordinaten umfassen. Das Meldeprotokoll hat dabei ein geeignetes Datenformat, um von den gewünschten externen Stellen empfangen und verarbeitet werden zu können. Die ausgesendeten Betriebsdaten inklusive der Information über Ist- und Plandaten von freien Anlagenspeicherkapazitäten und freien Anlagenleistungen können dann von einer externen Steuereinheit empfangen und entsprechend verplant werden und anschließend entsprechende anlagenspezifische nicht-ortsgebundene oder ortsgebundenen Regel- und Systemaufgaben in Form von externen Steuerbefehlen an die Energiespeicheranlage zurück übermittelt werden.

Die Erfindung betrifft des Weiteren ein Verfahren mit den Merkmalen des Anspruchs 14.

Die Energiespeicheranlage ist hier in einer Ausführungsform an ein nicht-lokales Stromnetz und an ein oder mehrere lokale Stromnetze angeschlossen. Hier werden die ortsgebundenen und nicht-ortsgebundenen Regel- und Systemaufgaben in den jeweiligen angeschlossenen Stromnetzen separat ausgeführt. In einer anderen Ausführungsform ist die Energiespeicheranlage lediglich an ein oder mehrere lokale Stromnetze angeschlossen, von denen zumindest ein lokales Stromnetz mit dem nicht-lokalen Stromnetz verbunden ist. In diesem Fall werden die ortsgebundenen Regel- und Systemaufgaben in den jeweiligen lokalen Stromnetzen ausgeführt, und die nicht-ortsgebundenen Regel- und Systemaufgaben werden über das angeschlossene lokale Stromnetz, das mit dem nicht-lokalen Stromnetz verbunden ist, in dem nicht-lokalen Stromnetz ausgeführt. In gewissen Betriebszuständen, beispielsweise bei Ausfall eines oder mehrerer Stromnetze kann eine Energiespeicheranlage auch vom nicht-lokalen Stromnetz völlig getrennt sein. Diese Trennung kann beispielsweise zeitlich beschränkt vorliegen. Dasselbe kann auch gegenüber dem oder den lokalen Stromnetzen vorkommen.

In einer Ausführungsform umfasst das Verfahren den weiteren Schritt:
- Ausführen der einzelnen externen Steuerbefehle anhand eines Prioritätenmanagements durch die Mastersteuereinheit, wobei die Ausführung der externen Steuerbefehle bezüglich ortsgebundener Regel- und Systemaufgaben in dem oder den lokalen Stromnetzen Vorrang vor der Ausführung der externen Steuerbefehle bezüglich nicht-ortsgebundener Regel- und Systemaufgaben in dem nicht-lokalen Stromnetz besitzt.

In einer Ausführungsform umfasst das Verfahren den weiteren Schritt:
- ausschließliches Ausführen der Steuerbefehle bezüglich der auszuführenden ortsgebundenen Regel- und Systemaufgaben in dem oder den angeschlossenen lokalen Stromnetzen bei einem gestörten Empfang der externer Steuerbefehle, wobei die Mastersteuereinheit dazu über die gesamten Modulspeicherkapazitäten und Modulleistungen aller mit ihr verbundenen Energiespeichermodule verfügt, bis der Empfang externer Steuerbefehle wieder hergestellt ist.

Vorzugsweise ist die Mastersteuereinheit dazu ausgestaltet, im Falle eines gestörten Empfangs die Verbindung über eines der im Kommunikationsnetzwerk vorhandenen alternativen Sub-Kommunikationsnetze wieder herzustellen. Dazu umfasst zumindest das Mastermodul mehrere Schnittstellen zu Sub-Kommunikationsnetzen im Kommunikationsnetzwerk. Im Normalbetrieb mit Kommunikationsverbindung werden also alle angeschlossenen Stromnetze bei der Regelung berücksichtigt. Der Begriff "Normalbetrieb" bezeichnet hier den Betrieb der Energiespeicheranlage bei vorhandenem nicht-lokalem Stromnetz, das weitgehend ungestört ist.

In einer Ausführungsform umfasst das Verfahren die weiteren Schritte:
- Überwachen und Steuern von Betriebszuständen der Slave-Module durch eine Slave-Steuereinheiten im jeweilige Slave-Modul, und
- periodisches Übermitteln von Betriebsdaten des Slave-Moduls, umfassend die nicht für die ortsgebundenen Regel- und Systemaufgaben benötigten Modulspeicherkapazität und die Modulleistung über die Datenleitung an die Mastersteuereinheit.

In einer Ausführungsform umfasst das Verfahren die weiteren Schritte:
- Überprüfen der empfangenen externen Steuerbefehle auf Plausibilität und/oder Herkunft durch eine erste Prüfeinheit des Mastermoduls und Übermitteln eines positiven oder negativen ersten Prüfergebnisses an die Mastersteuereinheit, bevor die Mastersteuereinheit die empfangenen externen Steuerbefehle speichert und/oder
- Überprüfen der von den Slave-Modulen übermittelten Betriebsdaten auf Plausibilität und/oder Herkunft durch eine zweite Prüfeinheit des Mastermoduls und übermitteln eines positiven oder negativen zweiten Prüfergebnisses an die Mastersteuereinheit, bevor die Mastersteuereinheit die übermittelten Betriebsdaten speichert.

In einer Ausführungsform umfasst das Verfahren die weiteren Schritte:
- Steuern aller Energiespeichermodule der Energiespeicheranlage in einen sicheren Betriebszustand bei einem negativen ersten Prüfergebnis durch die Mastersteuereinheit und Aussenden eines Alarmsignals an die Energiespeicheranlage und/oder nach extern und/oder
- Steuern des Slave-Moduls in einen sicheren Betriebszustand durch die Mastersteuereinheit, für dessen übermittelte Betriebsdaten ein negatives zweites Prüfergebnis durch die zweite Prüfeinheit erhalten wurde, und Aussenden eines Alarmsignal an die Energiespeicheranlage und/oder nach extern.

In einer Ausführungsform umfasst das Verfahren die weiteren Schritte:
- Aufstellen und Übermitteln einer Hierarchiefolge, nach der die Slave-Steuereinheiten beim Ausfall des bisherigen Mastermoduls oder der bisherigen Mastersteuereinheit die Steuerung der anderen Slave-Module übernehmen sollen,
- Übernehmen der Steuerung der Energiespeichermodule durch eines der Slave-Module als neues Mastermodule bei Ausfall des bisherigen Mastermoduls oder der bisherigen Mastersteuereinheit gemäß der Hierarchiefolge, wobei zumindest dieses Slave-Module ebenfalls eine Schnittstelle zum Empfangen externer Steuerbefehle bezüglich der auszuführenden ortsgebundenen und nicht-ortsgebundenen Regel- und Systemaufgaben umfasst.

In einer Ausführungsform umfasst das Verfahren die weiteren Schritte:
- periodisches Überprüfen der Datenleitung auf deren Funktionstüchtigkeit zumindest durch die Mastersteuereinheit mittels eines an die Slave-Module ausgesendeten so genannten Handschlagsignals,
- Übermitteln eines für das jeweilige Slave-Modul charakteristischen Rücksignals durch die jeweiligen Slave-Module aufgrund des empfangenen Handschlagsignals oder
- Trennen der Netzanschlüsse des Slave-Moduls von den jeweiligen Stromnetzen durch das Slave-Modul bei fehlendem Empfang des Handschlagsignals,
- Feststellung der Funktionstüchtigkeit der Datenleitung zu den jeweiligen Slave-Modulen durch die Mastereinheit aufgrund des empfangenen Rücksignals oder
- Trennen aller Netzanschlüsse von den jeweiligen Stromnetzen durch das Mastermodul bei fehlendem Rücksignal.

In einer Ausführungsform umfasst das Verfahren den weiteren Schritt:
- Festlegen eines der Energiespeichermodule als ein Mastermodul und der anderen Energiespeichermodule als Slave-Module.

### Kurze Beschreibung der Abbildungen

Diese und andere Aspekte der Erfindung werden im Detail in den Abbildungen wie folgt gezeigt.
- Fig.1:: ein Ausführungsbeispiel für eine erfindungsgemäße Energiespeicheranlage;
- Fig.2:: ein Ausführungsbeispiel eines Verfahrens zum Betreiben der erfindungsgemäßen Energiespeicheranlage;
- Fig.3:: ein Ausführungsbeispiel für das erfindungsgemäße Verfahren im Falle eines gestörten Empfangs der externen Steuerungsbefehle;
- Fig.4:: ein Ausführungsbeispiel für eine Reaktion der Energiespeicheranlage auf empfangene Regel- und Systemaufgaben mit zweifelhafter Herkunft und/oder Inhalt;
- Fig.5:: ein Ausführungsbeispiel für das erfindungsgemäße Verfahren im Falle einer gestörten Kommunikation mit den Slave-Modulen;
- Fig.6:: ein Ausführungsbeispiel für eine Reaktion der Energiespeicheranlage auf empfangene Betriebsdaten mit zweifelhafter Herkunft und/oder Inhalt;
- Fig.7:: ein Ausführungsbeispiel einer Schwarzstartunterstützung mit der erfindungsgemäßen Energiespeicheranlage;
- Fig.8:: ein Ausführungsbeispiel der Regeleinheit mit einer Regelbox.

### Detaillierte Beschreibung der Ausführungsbeispiele

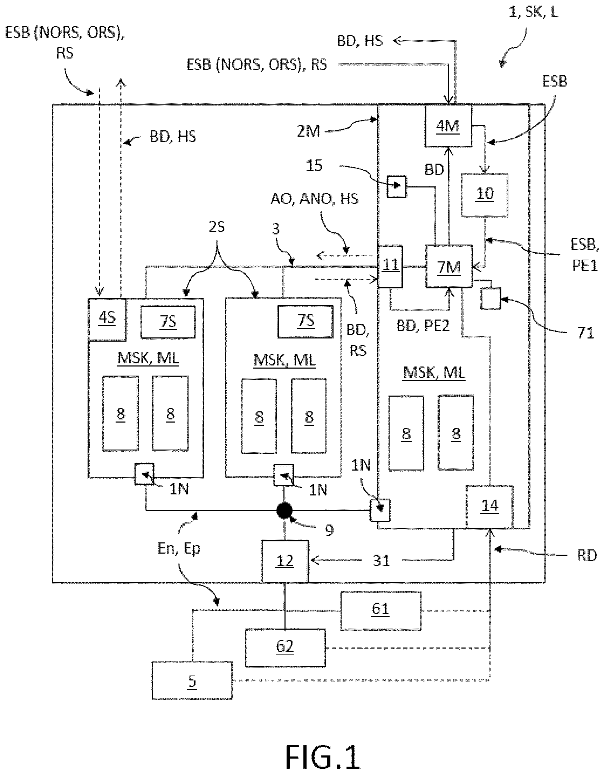

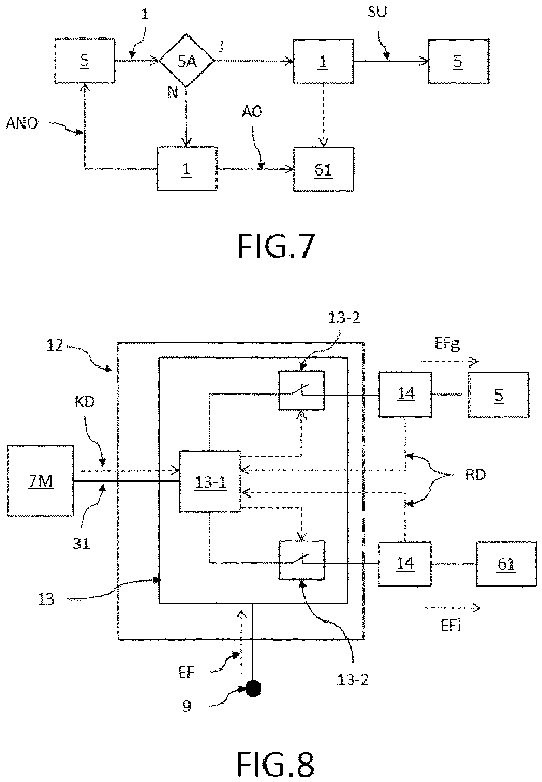

Fig. 1 zeigt ein Ausführungsbeispiel für die erfindungsgemäße Energiespeicheranlage 1. Die Energiespeicheranlage 1 hat in dieser Ausführungsform drei Energiespeichermodule 2M, 2S mit jeweils zwei Schwungradenergiespeichern 8 zur reversiblen Speicherung von Energie pro Energiespeichermodul 2M, 2S mit jeweils einer Modulspeicherkapazität MSK und einer Modulleistung ML. Die drei Energiespeichermodule 2M, 2S teilen sich auf in ein Mastermodul 2M zur Steuerung der Energiespeicheranlage 1 und zwei Slave-Module 2S. Das hier gezeigte Ausführungsbeispiel ist nur exemplarisch zu verstehen. Die Anzahl der Energiespeichermodule 2M, 2S pro Energiespeicheranlage 1 hängt von der jeweiligen gewünschten Anwendung ab und kann daher stark variieren. Es können auch Energiespeicheranlagen 1 mit nur einem einzigen Energiespeichermodul 2M verwendet werden, das in diesem Fall ein Mastermodul 2M ist. Die Energiespeichermodule 2M, 2S sind hier über einen gemeinsamen Aufschaltpunkt 9 verbunden, so dass deren Modulkapazitäten MSK und Modulleistungen ML in Summe als Anlagenspeicherkapazität SK und Anlagenleistung L der Energiespeicheranlage 1 für Regel- und Systemaufgaben NORS, ORS zur Verfügung steht. In Energiespeicheranlagen 1 mit nur einem einzigen Energiespeichermodul 2M kann der Aufschaltpunkt 9 auch entfallen. Ebenfalls kann die Anzahl der Schwungradenergiespeicher 8 in einem Energiespeichermodul 2M, 2S von Energiespeichermodul zu Energiespeichermodul und von Energiespeicheranlage zu Energiespeicheranlage variieren. Vorteilhaft ist eine hohe Anzahl an Schwungradenergiespeichern 8 pro Energiespeichermodul 2M, 2S, damit die Anlagenspeicherkapazität SK und Anlagenleistung L der Energiespeicheranlage 1 vergrößert wird. Die Energiespeichermodule 2M, 2S sind über eine Datenleitung 3 miteinander verbunden. Dabei ist diese Datenleitung erweiterbar, damit gegebenenfalls zu einem späteren Zeitpunkt zusätzliche Energiespeichermodule 2S zu den bestehenden drei Energiespeichermodule 2M, 2S hinzugefügt werden können. Gleiches gilt für die Netzanschlüsse 1 N an den gemeinsamen Aufschaltpunkt 9. Die Energiespeichermodule umfassen ein oder mehrere Netzanschlüsse 1 N, die in dieser Ausführungsform über einen gemeinsamen Aufschaltpunkt 9 zum Anschluss an das oder die Stromnetze 5, 61, 62 verbunden sind. Über den Aufschaltpunkt können die nicht-ortsgebundener Regel- und Systemaufgaben NORS im nicht-lokalen Stromnetz 5 und die ortsgebundenen Regel- und Systemaufgaben ORS in den lokalen Stromnetze 61, 62 mittels Aufnahme En und Abgabe Ep von Energie aus/an das oder die angeschlossenen Stromnetze 5, 61, 62 ausgeführt werden. Zur Aufspaltung des Energieflusses am Aufschaltpunkt in separate Energieflüsse in die separaten Stromnetze 5, 61, 62 umfasst die Energiespeicheranlage 1 eine Regeleinheit 12, die in Figur 8 im Detail beschrieben ist. Somit kann die gesamte Anlagenspeicherkapazität SK und die Anlagenleistung L zur Aufnahme En und Abgabe Ep von Energie an ein oder mehrere an die Energiespeicheranlage 1 angeschlossenen Stromnetze 5, 61, 62 verwendet werden. Bei einer Energiespeicheranlage 1, die lediglich an ein mit dem nicht-lokalen Stromnetz 5 verbundenes lokales Stromnetz 61, 62 angeschlossen ist, umfasst die Regeleinheit zumindest einen Trennschalter. Hier ist eine Aufspaltung der Energieflüsse nicht notwendig, da der gesamte Energiefluss EF in das lokale Stromnetz 5 mündet. Das Mastermodul 2M ist zur Gesamtsteuerung aller an die Datenleitung 3 angeschlossenen Energiespeichermodule 2M, 2S ausgebildet und umfasst dazu zumindest eine Schnittstelle 4M zum Empfangen EM externer Steuerbefehle ESB bezüglich der auszuführenden ortsgebundenen und nicht-ortsgebundenen Regel- und Systemaufgaben ORS, NORS und eine Mastersteuereinheit 7M zum Speichern S und Ausführen AO, ANO der externen Steuerbefehle ESB. Hierbei verfügt die Mastersteuereinheit 7M über die Modulspeicherkapazitäten MSK und Modulleistungen ML aller mit ihr verbundenen Energiespeichermodule 2M, 2S führt die nicht-ortsgebundenen Regel- und Systemaufgaben NORS nur im Rahmen der Anteile SKg, Lg der Anlagenspeicherkapazitäten SK und/oder Anlagenleistung L aus ANO, die nicht für die ortsgebundenen Regel- und Systemaufgaben ORS benötigt werden. Dazu umfasst das Mastermodul ein Prioritätenmanagement 71 zum Ausführen AO, ANO der einzelnen externen Steuerbefehle ESB, wobei die Ausführung AO der externen Steuerbefehle ESB bezüglich ortsgebundener Regel- und Systemaufgaben ORS in dem oder den lokalen Stromnetzen 61, 62 Vorrang vor der Ausführung ANO der externen Steuerbefehle ESB bezüglich nicht-ortsgebundener Regel- und Systemaufgaben NORS in dem nicht-lokalen Stromnetz 5 besitzt. Dieses Prioritätsmanagement 71 ist beispielsweise als Datenspeicher mit einer daraus gespeicherten Prioritätenfolge. Die Prioritätenfolge kann in Form einer Datei vorliegen, die beispielsweise vor Ort ersetzt oder geändert werden kann. In einer Ausführungsform ist vorgesehen, dass aus Anlagensicherheitsgründen auf das Prioritätsmanagement 71 nicht über die Schnittstelle 4M zugegriffen werden kann. Die Slave-Module 2S, umfassend in dieser Ausführungsform jeweils eine Slave-Steuereinheiten 7S, die die Betriebszustände BZ des jeweiligen Slave-Moduls 2S überwachen und steuern und dem Mastermodul 2M die Betriebsdaten BD des Slave-Moduls 2S über die Datenleitung 3 übermitteln. Die Slave-Module 2S werden hier gemeinsam von der Mastersteuereinheit 7M gesteuert, indem sie die Slave-Steuereinheiten 7S zur Ausführung der Regel- und Systemaufgaben ORS, NORS anweist und die einzelnen Slave-Steuereinheiten 7S die Anweisungen in entsprechende Maschinenparameter für die Schwungradenergiespeicher 8 umsetzen. Alternativ könnte auf die Slave-Steuereinheiten 7S verzichtet und alle deren Funktionen ebenfalls von der Mastersteuereinheit 7M ausgeführt werden. Die Steuerung besteht darin, dass die Mastersteuereinheit 7M den einzelnen Energiespeichermodulen 2M, 2S vorschreibt, wie viel Energie aus dem Schwungsradenergiespeichern 8 mittels Abbremsung abgegeben oder in die einzelnen Schwungsradenergiespeichern 8 mittels Beschleunigung aufgenommen werden soll. Damit diese Energieaufnahme oder Abgabe wie gewünscht durchgeführt werden kann, steuern daraufhin die Slave-Steuereinheiten 2S die Antriebsmotoren der Schwungradenergiespeicher 8 zur Abbremsung oder Beschleunigung der einzelnen Schwungradenergiespeicher 8. In dieser Ausführungsform umfasst ein Slave-Modul 2S ebenfalls eine Schnittstelle 4S zum Empfangen EM externer Steuerbefehle ESB bezüglich der auszuführenden ortsgebundenen und nicht-ortsgebundenen Regel- und Systemaufgaben ORS, NORS, wobei die Slave-Steuereinheit 7S zum Speichern S der externen Steuerbefehle ESB und zur Steuerung AO, ANO der anderen Slave-Module 2S als neue Mastersteuereinheit 7M-N bei Ausfall des bisherigen Mastermoduls 2M oder der bisherigen Mastersteuereinheit 7M ausgebildet ist.

Aus Gründen der Anlagensicherheit umfasst das Mastermodul 2M hier zusätzlich eine erste Prüfeinheit 10, die die über die Schnittstelle 4M empfangenen externen Steuerbefehle ESB auf Plausibilität und/oder Herkunft überprüft und der Mastersteuereinheit 7M ein positives PP oder negatives NP erstes Prüfergebnis PE1 übermittelt, bevor die Mastersteuereinheit 7M die empfangenen externen Steuerbefehle ESB speichert S. So wird verhindert, dass Unbefugte von extern auf die Energiespeicheranlage 1 zugreifen und unerwünschte Betriebszustände verursachen können. Des Weiteren umfasst das hier gezeigte Mastermodul 2M eine zweite Prüfeinheit PE2, die die von den Slave-Modulen 2S übermittelten Betriebsdaten BD auf Plausibilität und/oder Herkunft überprüft und der Mastersteuereinheit 7M ein positives PP oder negatives NP zweites Prüfergebnis PE2 übermittelt, bevor die Mastersteuereinheit 7M die übermittelten Betriebsdaten BD speichert S. Mit den beiden Prüfeinheiten werden sowohl unbefugte Zugriffe von außen über die Schnittstelle als auch über die interne Datenkommunikation wirkungsvoll unterbunden. Die Speicherung S der Regel- und Systemaufgaben kann dabei in einem Aufgabenspeicher 15 erfolgen, auf den die Mastersteuereinheit 7M zur Steuerung der Energiespeicheranlage 1 gemäß der nicht-ortsgebundenen und ortsgebundenen Regel- oder Systemaufgaben NORS, ORS über die Datenverbindung zugreifen kann. Die Mastersteuereinheit 7M kann dabei in periodischen Abständen, beispielsweise im Bereich von Millisekunden, oder nach jeder erfolgten Speicherung S auf den Aufgabenspeicher 15 zur Erfassung eventuell neuer ortsgebundener und/oder nicht-ortsgebundener Regel- und Systemaufgaben ORS, NORS zugreifen. Bei einem negativen NP ersten und/oder zweiten Prüfergebnis PE1, PE2 sendet die Mastersteuereinheit 7M ein Alarmsignal AS aus.

Bei bestehender Verbindung nach Extern ist die Mastersteuereinheit 7M dazu ausgestaltet, die vorher von ihr erfassten und ausgewerteten Betriebsdaten BD der Energiespeicheranlage 1 in einem Meldeprotokoll MP, umfassend diese Betriebsdaten BD, über die Schnittstelle 4M nach extern auszusenden, damit die Betriebsdaten BD zumindest für die zu empfangenden externen Steuerbefehle ESB berücksichtigt werden können.

Das Mastermodul umfasst des Weiteren ein oder mehrere Messeinheiten 14 zur Messung einzelner oder mehrerer relevanter Daten RD (gestrichelte Pfeile) im jeweiligen angeschlossenen lokalen und nicht-lokalen Stromnetz 5, 61, 62. Die Mastersteuereinheit 7M ist dabei dazu vorgesehen, die Steuerung AO, ANO der Energiespeicheranlage 1 für die ortsgebundenen und nicht-ortsgebundenen Regel- und Systemaufgaben, ORS, NORS in den lokalen und nicht-lokalen Stromnetzen 5, 61, 62 auf Basis der gemessenen relevanten Daten RD auszuführen. Aufgrund der so gemessenen und in der Energiespeichereinheit 1 damit verfügbaren relevanten Daten RD kann die Mastersteuereinheit 7M nach Auswertung der relevanten Daten RD und dem Vergleich mit den vorgesehenen ortsgebundenen und nicht-ortsgebundenen Regel- und Systemaufgaben ORS, NORS die Steuerung der lokalen Energiespeicheranlage 1 für die ortsgebundenen und nicht-ortsgebundenen Regel- und Systemaufgaben ORS, NORS in diesen lokalen und nicht-lokalen Stromnetzen 5, 61, 62 zielgerichtet und flexibel zur Steuerung der Netzqualität ausführen.

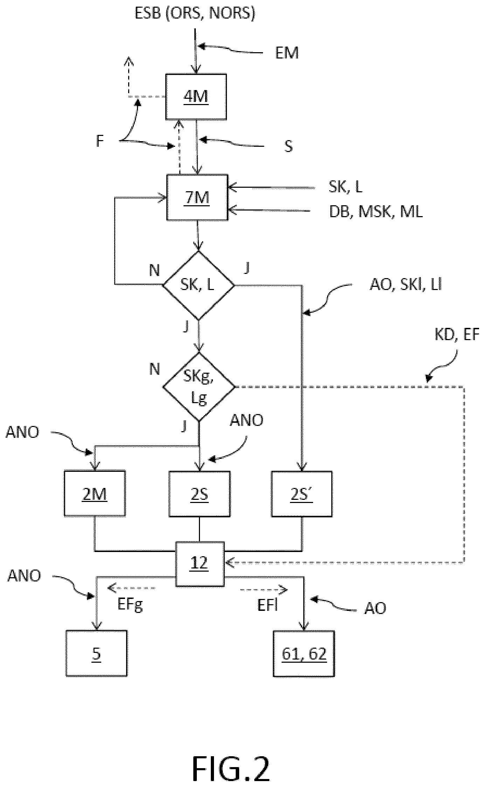

Fig. 2 zeigt ein Ausführungsbeispiel eines Verfahrens zum Betreiben der erfindungsgemäßen Energiespeicheranlage 1. Die Energiespeicheranlage 1 empfängt EM externe Steuerbefehle ESB bezüglich nicht-ortsgebundenen und/oder ortsgebundene Regel- und Systemaufgaben NORS, ORS über eine Schnittstelle 4M und speichert S die empfangenen Steuerbefehle. Auf Basis der empfangenen ortsgebundenen und nicht-ortsgebundenen Regel- und Systemaufgaben ORS, NORS prüft die Mastersteuereinheit 7M die Ausführbarkeit der empfangenen ortsgebundenen und nicht-ortsgebundenen Regel- und Systemaufgaben im Rahmen der Anlagenspeicherkapazität SK und Anlagenleistung L der Energiespeicheranlage 1 sowie der von den Slave-Modulen 2S übermittelten Betriebsdaten BD und jeweiligen Modulspeicherkapazitäten MSK und Modulleistungen ML. Sofern die ortsgebundenen Regel- und Systemaufgaben ORS ausführbar sind, werden diese durch eine vorrangige Steuerung AO, beispielsweise durch das Slave-Moduls 2S', im angeschlossenen lokalen Stromnetz 61, 62 mit einer benötigten lokalen Anlagenkapazität SKI und einer lokalen Anlagenleistung LI ausgeführt. Die nicht-ortsgebundenen Regel- und Systemaufgaben NORS werden ebenfalls auf ihre generelle Ausführbarkeit im Rahmen der Anlagenspeicherkapazität SK und Anlagenleistung L geprüft. Ist eine Ausführung generell nicht möglich, da die empfangenen nicht-ortsgebundenen Regel- und Systemaufgaben NORS die Möglichkeiten der Energiespeicheranlage 1 überschreiten, wird die Mastersteuereinheit 7M ein entsprechendes Fehlersignal F über die Schnittstelle 4M aussenden und diese nicht-ortsgebundenen Regel- und Systemaufgaben NORS für eine erneute Ausführung blockieren. Durch die Ausführung der ortsgebundenen Regel- und Systemaufgaben ORS stehen den nicht-ortsgebundenen Regel- und Systemaufgaben NORS nur die für die ortsgebundenen Regel- und Systemaufgaben ORS nicht benötigten nicht-lokalen Anlagenkapazität SKg und Anlagenleistung Lg zur Verfügung. Selbst bei im Prinzip durch die Energiespeicheranlage 1 ausführbaren nicht-ortsgebundenen Regel- und Systemaufgaben NORS wird nun geprüft, ob diese im Rahmen der freien nicht-lokalen Kapazitäten SKg und freien nicht-lokalen Leistungen Lg tatsächlich ausführbar sind. Ergibt die Prüfung, dass die nicht-ortsgebundenen Regel- und Systemaufgaben NORS momentan nicht ausführbar sind, werden diese für die Ausführung durch die Mastersteuereinheit 7M zurückgestellt und beispielsweise im Aufgabenspeicher 15 entsprechend markiert. Ergibt die Prüfung, dass die nicht-ortsgebundenen Regel- und Systemaufgaben NORS momentan ausführbar sind, so steuert ANO die Mastersteuereinheit 7M die Energiespeicheranlage 1 entsprechend, dass die nicht-ortsgebundenen Regel- und Systemaufgaben NORS im angeschlossenen nicht-lokalen Stromnetz 5 erfüllt (ausgeführt) werden. Dabei können die Teilaufgaben zur Ausführung AO, ANO der Regel- und Systemaufgaben ORS, NORS von der Mastersteuereinheit 7M geeignet auf die Slave-Module 2S aufgeteilt werden. Hier ist beispielsweise das Mastermodul 2M und das Slave-Module 2S mit der Ausführung ANO der nicht-ortsgebundenen Regel- und Systemaufgaben NORS beauftragt, während das andere Slave-Modul 2S' die Ausführung AO der ortsgebundenen Regel- und Systemaufgaben ORS bewirkt. Dazu bekommt die Regeleinheit 12 entsprechende Konfigurationsdaten zur Regelfunktion KD als Anweisungen für die Steuerung und Aufteilung des Energieflusses EF in einen Energiefluss EFg in das/aus dem nicht-lokalen Stromnetz 5 und einen Energiefluss EFI in das/aus dem lokalen Stromnetz 61 durch die Steuereinheit 13 über eine entsprechende Datenverbindung 31 übermittelt.

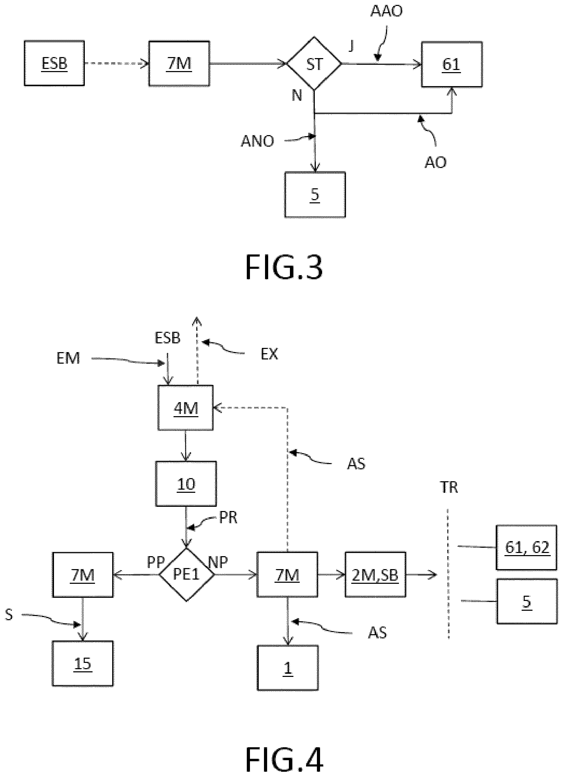

Fig. 3 zeigt ein Ausführungsbeispiel für das erfindungsgemäße Verfahren im Falle eines gestörten Empfangs EM externer Steuerbefehle ESB. Bei bestehender Kommunikationsverbindung wurden externe Steuerbefehle ESB an die Energiespeicheranlage 1 übermittelt und von dieser empfangen und im Aufgabenspeicher 15 abgespeichert. Greift nun die lokale Mastersteuereinheit 7M auf den Aufgabenspeicher 15 zu, so wird dabei auch geprüft ST, ob das Energiespeichersystem 1 weiterhin nach extern verbunden ist oder ob der Empfang von extern gestört ST ist. Ist das Ergebnis der Prüfung, dass keine Störung vorliegt ("N"), beispielsweise durch einen vorstehend beschriebenen durchgeführten digitalen Handschlag mit Aussendung eines Handschlagsignals HS und Erhalt eines entsprechenden Rücksignals RS, wird die Energiespeicheranlage 1 vorrangig die ortsgebundenen Regel- und Systemaufgaben ORS für das angeschlossene lokale Stromnetz 61 (in der hier gezeigten Ausführungsform ist nur ein lokales Stromnetz angeschlossen) ausführen AO und im Rahmen der freien nicht-lokalen Kapazitäten SKg und freien nicht-lokalen Leistungen Lg auch die nicht-ortsgebundenen Regel- und Systemaufgaben NORS für das nicht-lokale Stromnetz 5 ausführen ANO. Sollte die Prüfung ergeben, dass eine Störung ST der Verbindung vorliegt ("J"), werden ausschließlich die ortsgebundenen Regel- und Systemaufgaben ORS für das lokale Stromnetz 61 durchgeführt AAO. Durch eine periodische Prüfung der Kommunikationsverbindung kann zu einem späteren Zeitpunkt die Prüfung wieder positiv ausfallen, so dass die Energiespeicheranlage 1 erneut die ortsgebundenen und nicht-ortsgebundenen Regel- und Systemaufgaben ORS, NORS im Rahmen der verfügbaren Kapazitäten und Leistungen SK, SKg, SKI, L, Lg, LI parallel ausführt.

Fig. 4 zeigt ein Ausführungsbeispiel für eine Reaktion der Energiespeicheranlage 1 auf empfangene externe Steuerbefehle ESB mit zweifelhafter Herkunft und/oder zweifelhaftem Inhalt. Hierbei werden die externen Steuerbefehle ESB über die Schnittstelle 4M vom Mastermodul 2M empfangen und an die erste Prüfeinheit 10 weitergeleitet. Dort findet eine Prüfung PR der empfangenen externen Steuerbefehle ESB auf Plausibilität und Herkunft statt. Die erste Prüfeinheit 10 umfasst dazu ein entsprechendes Prüfprogramm, das automatisch auf jede empfangene ortsgebundene oder nicht-ortsgebundene Regel- und Systemaufgabe ORS, NORS angewendet wird. Bei einem positiven PP ersten Prüfergebnis PE1 (PE1=PP) werden die empfangenen Steuerbefehle ESB im Aufgabenspeicher 15 des Mastermoduls 2M gespeichert S. Die für die Speicherung S zugelassenen Regel- und Systemaufgaben ORS, NORS können beispielsweise mit einer entsprechenden Indizierung von der Prüfeinheit 10 (beispielsweise ein gesetztes Bit oder eine andere Markierung) versehen werden. In diesem Fall speichert der Aufgabenspeicher 15 nur entsprechend indizierte Regel- und Systemaufgaben ORS, NORS ab. Alternativ kann die erste Prüfeinheit 10 auch nur die positiv PP geprüften Regel- und Systemaufgaben ORS, NORS an den Aufgabenspeicher 15 weiterleiten. In diesem Fall bräuchten die Regel- und Systemaufgaben ORS, NORS nicht markiert oder indiziert zu werden, da negativ geprüfte Regel- und Systemaufgaben ORS, NORS von der ersten Prüfeinheit 10 nicht weitergeleitet werden und somit der Aufgabenspeicher 15 keine Erkennung des Prüfergebnissees PE1 durchführen muss. In einer weiteren alternativen Ausgestaltung kann die erste Prüfeinheit 10 die geprüften Regel- und Systemaufgaben ORS, NORS in einem Zwischenspeicher, beispielsweise in der ersten Prüfeinheit 10, ablegen und dem Arbeitsspeicher 15 eine Datenliste der positiv PP geprüften Regel- und Systemaufgaben ORS, NORS zusenden, woraufhin der Aufgabenspeicher 15 automatisch die positiv PP geprüften Regel- und Systemaufgaben ORS, NORS aus dem Zwischenspeicher lädt und im Aufgabenspeicher 15 abspeichert S. Auf die im Aufgabenspeicher 15 gespeicherten ortsgebundenen und nicht-ortsgebundenen Regel- und Systemaufgaben ORS, NORS kann die Mastersteuereinheit 7M über eine Datenverbindung zu deren Ausführung zugreifen. Die gespeicherten ortsgebundenen Regel- und Systemaufgaben ORS werden simultan, aber vorrangig vor den nicht-ortsgebundenen Regel- und Systemaufgaben NORS ausgeführt. Die simultane Ausführung ist immer möglich, sofern beide Regel- und Systemaufgaben ORS, NORS im Rahmen der Anlagenspeicherkapazität und der Anlagenleistung ausführbar sind. Sofern dies nicht gegeben ist, werden die ortsgebundenen Regel- und Systemaufgaben ORS vorrangig ausgeführt. Ist das Prüfergebnis PE dagegen negativ (PE=N), wird ein Alarmsignals AS durch die Mastersteuereinheit 7M an die Energiespeicheranlage 1 (und/oder nach extern EX über die Schnittstelle 4M) ausgesendet und die Mastersteuereinheit 7M veranlasst eine Trennung TR der Energiespeicheranlage 1 von den angeschlossenen Stromnetzen 5, 61, 62. Diese erfolgte Trennung TR wird durch die gestrichelte senkrechte Linie zwischen Regeleinheit 16 und Stromnetzen 5, 61, 62 schematisch dargestellt.

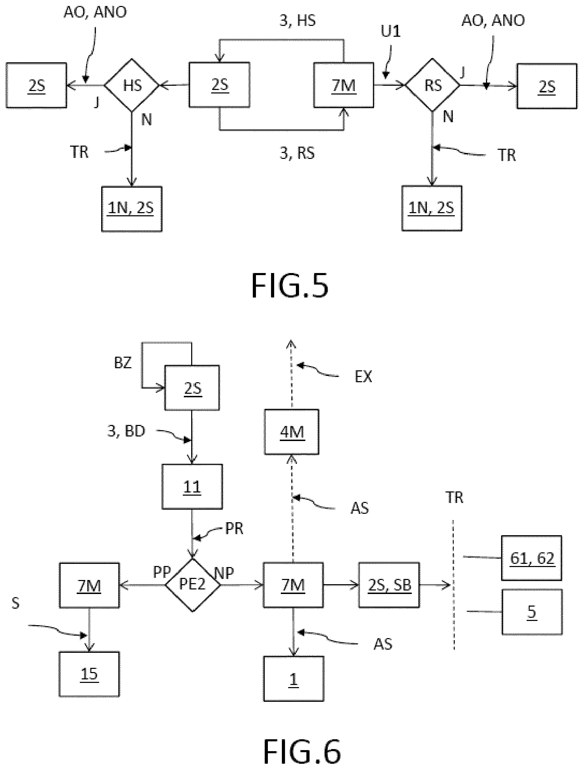

Fig. 5 zeigt ein Ausführungsbeispiel für das erfindungsgemäße Verfahren im Falle einer gestörten Kommunikation mit den Slave-Modulen 2S. Hier überprüft U1 die Mastersteuereinheit 7M die Datenleitung 3 zu den Slave-Modulen 2S periodisch auf deren Funktionstüchtigkeit mittels eines an die Slave-Module 2S ausgesendeten so genannten Handschlagsignals HS, woraufhin die Slave-Module 2S aufgrund des empfangene Handschlagsignals HS ein für das jeweilige Slave-Modul 2S charakteristisches Rücksignal RS zur Mastersteuereinheit 7M übermitteln. Die Mastersteuereinheit 7M ist dazu vorgesehen, aufgrund des empfangenen Rücksignals RS die Funktionstüchtigkeit der Datenleitung 3 zu den jeweiligen Slave-Modulen 2S festzustellen. Empfängt die Mastersteuereinheit 7M das Rücksignal RS, so führt sie über die Slave-Module 2S die Regel- und Systemaufgaben ORS, NORS aus AO, ANO. Sofern die Mastersteuereinheit 7M kein Rücksignal eines oder aller Slave-Module 2S empfängt, werden die Netzanschlüsse 1 N des betreffenden Slave-Moduls 2S oder alle Netzanschlüsse 1 N zu den angeschlossenen Stromnetzen von der Mastersteuereinheit 7M getrennt TR. Empfängt dagegen das Slave-Modul 2S kein Handschlagsignals HS von der Mastersteuereinheit 7M, so trennt TR das Slave-Modul 2S die Netzanschlüsse 1 N des Slave-Moduls 2S von den jeweiligen angeschlossenen Stromnetzen 5, 61, 62. Die Trennung kann hier beispielsweise über eine Trennung der Verbindung zum Aufschaltpunkt 9 hin erfolgen.

Fig. 6 zeigt ein Ausführungsbeispiel für eine Reaktion der Energiespeicheranlage auf empfangene Betriebsdaten BD mit zweifelhafter Herkunft und/oder Inhalt. Die Slave-Module 2S beziehungsweise deren Slave-Steuereinheiten 7S überwachen kontinuierlich die Betriebszustände BZ des jeweiligen Slave-Moduls 2S und übermitteln dem Mastermodul 2M beziehungsweise der Mastersteuereinheit 7M über die Datenleitung 3 die Betriebsdaten BD des Slave-Moduls 2S, umfassend die nicht für die ortsgebundenen Regel- und Systemaufgaben ORS benötigten Modulspeicherkapazität MSK und die Modulleistung ML. In der zweiten Prüfeinheit 11 des Mastermoduls werden nun die von den Slave-Modulen 2S übermittelten Betriebsdaten BD auf Plausibilität und/oder Herkunft überprüft. Ist das zweite Prüfungsergebnis PE2 positiv PP, so speichert die Mastersteuereinheit 7M die übermittelten Betriebsdaten BD in einem Aufgabenspeicher 15. Ist das zweite Prüfergebnis PE2 dagegen negativ, so wird das betreffende Slave-Modul 2S vom Mastermodul 7M in einen sicheren Betriebszustand SB gesteuert, hier trennt TR die Mastersteuereinheit 7M die Netzanschlüsse 1 N dieses Slave-Moduls 2S von den angeschlossenen Stromnetzen 5, 61, 62 und sendet ein Alarmsignal AS an die Energiespeicheranlage 1 und über die Schnittstelle 4M nach extern EX aus. Für die Netztrennung ist die Mastersteuereinheit 7M mit den Netzanschlüssen 1 N der Slave-Module schaltbar verbunden.

Fig. 7 zeigt ein Ausführungsbeispiel für das erfindungsgemäße Verfahren im Falle eines Ausfalls 5A des nicht-lokalen Stromnetzes 5. In diesem Ausführungsbeispiel steht die Energiespeicheranlage 1 für eine Schwarzstartunterstützung SU bereit, sofern das nicht-lokale Stromnetz 5 ausfallen 5A sollte. Die Energiespeicheranlage 1 prüft kontinuierlich, beispielsweise über die entsprechende Regeleinheit 12, das Vorhandensein des nicht-lokalen Stromnetzes 5. Wenn die Prüfung ergibt, dass das nicht-lokale Stromnetz 5 vorhanden ist (5A = N), werden die Energiespeicheranlagen 1 im Normalbetrieb, wie in Figur 1 dargestellt, weiter betrieben, so dass die Energiespeicheranlagen 1 gemäß der ortsgebundenen und nicht-ortsgebundenen Regel- und Systemaufgaben ORS, NORS gesteuert AO, ANO werden. Wenn die Prüfung ergibt, dass das nicht-lokale Stromnetz 5 ausgefallen ist (5A = J), erhält die Schwarzstartunterstützung SU für das nicht-lokale Stromnetz 5 Vorrang vor den ortsgebundenen Regel- und Systemaufgaben ORS (dargestellt durch den gestrichelten Pfeil zum lokalen Stromnetz 61). Die Energiespeicheranlage 1 wird nach oder mit entsprechender Synchronisation der Einspeisefrequenz gemeinsam mit anderen Energiespeicheranlagen oder Kraftwerken einen Schwarzstart für das nicht-lokale Stromnetz 5 durchführen. Sobald der Schwarzstart gelungen ist, werden wieder die ortsgebundenen Regel- und Systemaufgaben ORS mit Vorrang durchgeführt.

Fig. 8 zeigt ein Ausführungsbeispiel der Regeleinheit 12, die in diesem Ausführungsbeispiel an ein lokales Stromnetz 61 und an ein nicht-lokales Stromnetz 5 angeschlossen ist. Damit die Regeleinheit 12 den Energiefluss EF zwischen den angeschlossenen Stromnetzen 5, 61 und der Energiespeicheranlage 1 regeln und im Bedarfsfall ein oder mehrere der angeschlossenen Stromnetze, hier das lokale Stromnetz 61 und/oder das nicht-lokale Stromnetz 5, von der lokalen Energiespeicheranlage 1 trennen kann, umfasst die Regeleinheit 12 in dieser Ausführungsform eine Regelbox 13 mit einem Regelglied 13-1 und separate Trennschalter 13-2 für jedes der angeschlossenen Stromnetze 5, 61. Die Mastersteuereinheit 7M ist über eine Datenverbindung 31 mit dem Regelglied 13-1 der Regelbox 13 verbunden und übermittelt der Regelbox 13, hier direkt dem Regelglied 13-1, zur Steuerung der Energieflüsse entsprechende Konfigurationsdaten der Reglerfunktion KD. Aufgrund der Konfigurationsdaten der Reglerfunktion KD steuert das Regelglied 13-1 die Verteilung des vom Aufschaltpunkt 9 eingehenden Energieflusses EF auf die angeschlossenen Stromnetze 5, 61 als Energiefluss EFI für das lokale Stromnetz 61 und als Energiefluss EFg für das nicht-lokale Stromnetz 5. In diesem Ausführungsbeispiel ist lediglich exemplarisch die Verteilung des Energieflusses EF bei Einspeisung von Energie in beide angeschlossene Stromnetze 5, 61 gezeigt. Die Regelbox 13 ist gleichermaßen dafür ausgestaltet, einen Energiefluss aus einem der angeschlossenen Stromnetze 5, 61 und einen Energiefluss in das andere angeschlossene Stromnetz 61, 5 zu steuern, wobei je nach Größe der beiden Energieflüsse entweder der negative Energieüberschuss von der Energiespeicheranlage 1 gespeichert oder der positive Energieüberschuss von der Energiespeicheranlage 1 bereitgestellt wird. Die Energiespeicheranlage 1 ist hier nicht explizit gezeigt, sondern nur symbolisch über die entsprechenden Komponenten 7M, 12, 14 dargestellt. Die Regelbox 13 empfängt von entsprechenden Messeinheiten 14 simultan die relevanten Daten RD aus beiden angeschlossenen Stromnetzen 5, 61, woraus das Regelglied 13-1 das Vorhandensein der beiden angeschlossenen Stromnetze 5, 61 mittels in dem Regelglied 13-1 hinterlegten Kriterien oder Schwellwerte für die relevanten Daten RD ableitet. Sollte eines oder beide der angeschlossenen Stromnetze 5, 61 aufgrund eines Netzausfalls nicht mehr zur Verfügung stehen, so manifestiert sich der Ausfall des jeweiligen Stromnetzes 5, 61 in den entsprechenden, an das Regelglied 13-1 übermittelten relevanten Daten RD, woraufhin das Regelglied 13-1 automatisch entsprechende Trenn-Anweisungen (gestichelter Pfeil) an den oder die betreffenden Trennschalter 13-2 zur Trennung der Energiespeicheranlage 1 von dem oder den angeschlossenen Stromnetzen 5, 61 aussendet, woraufhin der oder die Trennschalter 13-2 das oder die vormals angeschlossenen Stromnetze 5, 61 von der Energiespeicheranlage 1 trennen. Die Trennung des angeschlossenen Stromnetzes erfolgt dabei innerhalb weniger Millisekunden. Bei der Trennung von nur einem Stromnetz bleibt die Energiespeicheranlage 1 weiterhin für die anderen noch weiterhin angeschlossenen Stromnetze betriebsbereit. Damit kann bei Ausfall eines Stromnetzes ein Kurzschluss oder eine Überlastsituation effektiv verhindert werden. Das hier gezeigte Ausführungsbeispiel mit einem angeschlossenen lokalen Stromnetz 61 und einem angeschlossenen nicht-lokalen Stromnetz 5 ist nur ein Bespiel für zwei angeschlossene Stromnetze. Die Regeleinheit 16, insbesondere die Regelbox 13, kann in anderen Ausführungsformen auch an mehr als zwei Stromnetze angeschlossen sein. Die zwei oder mehr angeschlossenen Stromnetze können auch jeweils lokale Stromnetze sein, von denen zumindest eines der lokalen Stromnetze mit dem nicht-lokalen Stromnetz zur Ausführung der nicht-ortsgebundenen Regel- und Systemaufgaben verbunden ist Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäße Energiespeicheranlage
- 1N: Netzanschlüsse der einzelnen Energiespeichermodule oder der Energiespeicheranlage
- 2M: Energiespeichermodul als Mastermodul
- 2S, 2S': Energiespeichermodule als Slave-Module
- 3: Datenleitung
- 31: Datenverbindung
- 4M: Schnittstellen des Mastermoduls zum Empfangen externer Steuerbefehle
- 4S: Schnittstellen des Slave-Moduls zum Empfangen externer Steuerbefehle
- 5: nicht-lokales Stromnetz
- 5A: Ausfall des nicht-lokalen Stromnetzes
- 61, 62: lokales Stromnetz
- 7M: Mastersteuereinheit des Mastermoduls
- 7S: Slave-Steuereinheit des Slave-Moduls
- 71: Prioritätenmanagement
- 8: Schwungradenergiespeicher
- 9: Aufschaltpunkt
- 10: erste Prüfeinheit
- 11: zweite Prüfeinheit
- 12: Regeleinheit zum Anschluss der Energiespeicheranlage an die Stromnetze
- 13: Regelbox
- 13-1: Regelglied
- 13-2: Trennschalter
- 14: Messeinheit der Energiespeicheranlage
- 15: Speicher für die externen Steuerbefehle
- A1N: Anschließen der Energiespeichermodule an das oder die Stromnetze
- AAO: ausschließliches Ausführen der jeweiligen ortsgebundenen Regel- und Systemaufgaben
- ANO: Ausführen der externen Steuerbefehle / Steuern Energiespeicheranlage / Energiespeichermodule zu den nichtortsgebundenen Regel- und Steueraufgaben
- AO: Ausführen der externen Steuerbefehle / Steuern Energiespeicheranlage / Energiespeichermodule zu den ortsgebundenen Regel- und Steueraufgaben
- AS: Alarmsignal
- BD: Betriebsdaten der Energiespeichermodule
- EF: Energiefluss
- EFg: Energiefluss zum nicht-lokalen Stromnetz
- EFI: Energiefluss zum lokalen Stromnetz
- EM: Empfangen externer Steuerbefehle
- En: Aufnahme von Energie aus dem Stromnetz durch die Energiespeicheranlage (Bereitstellung negativer Energie)
- Ep: Abgabe von Energie in das Stromnetz durch die Energiespeicheranlage (Bereitstellung positiver Energie)
- ESB: externe Steuerbefehle
- EX: nach extern
- F: Fehlersignal
- FT: Überprüfen der Funktionstüchtigkeit der Datenleitung / Feststellen der Funktionstüchtigkeit
- HF: Hierarchie der Führung im Regelverbund oder im regionalen Verbund
- HS: Handschlagsignal
- KD: Konfigurationsdaten der Regelfunktion
- L: Anlagenleistung der Energiespeicheranlage (Gesamtleistung)
- Lg: für die nicht-ortsgebundenen Regel- und Systemaufgaben verfügbare Anlagenleistung (nicht-lokale Leistung)
- LI: für die ortsgebundenen Regel- und Systemaufgaben vorgesehene Anlagenleistung (lokale Leistung)
- ML: Modulleistung
- MSK: Modulspeicherkapazität
- NP: negatives Prüfergebnis
- NORS: nicht-ortsgebundene Regel- und Systemaufgaben
- ORS: ortsgebundene Regel- und Systemaufgaben
- PP: positives Prüfergebnis
- PE1: erstes Prüfergebnis
- PE2: zweites Prüfergebnis
- PR: Prüfen der empfangenen NORS,ORS
- RD: relevante Daten des lokalen Stromnetzes
- RS: Rücksignal zum Handschlagsignal
- S: Speichern von Daten
- SB: sicherer Betriebszustand
- SK: Anlagenspeicherkapazität der Energiespeicheranlage (Gesamtkapazität)
- SKg: für die nicht-ortsgebundenen Regel- und Systemaufgaben verfügbare lokale Anlagenspeicherkapazität (nicht-lokale Kapazität)
- SKI: für die ortsgebundenen Regel- und Systemaufgaben vorgesehene lokale Anlagenspeicherkapazität (lokale Kapazität)
- ST: Störung des Empfangs der externen Steuerbefehle
- SU: Schwarzstartunterstützung
- TR: Trennen der Energiespeicheranlage von den angeschlossenen Stromnetzen
- U1: Überprüfen des Erhalts des Rücksignals
- Z: Zugreifen der Mastersteuereinheit auf den Aufgabenspeicher

## Patentansprüche

1. Eine Energiespeicheranlage (1) mit einer Anlagenspeicherkapazitäten (SK) und Anlagenleistung (L) und mit mehreren Energiespeichermodulen (2M, 2S) mit jeweils einer Modulspeicherkapazität (MSK) und einer Modulleistung (ML), die über ein oder mehrere Datenleitungen (3), vorzugsweise ein Datenbussystem, miteinander verbunden sind, wobei eines der Energiespeichermodule (2M, 2S) als Mastermodul (2M) und die anderen Energiespeichermodule (2S) als Slave-Module (2S) vorgesehen sind und das Mastermodul (2M) zur Gesamtsteuerung aller an die Datenleitung (3) angeschlossenen Energiespeichermodule (2M, 2S) ausgebildet ist und zumindest das Mastermodul (2M) mindestens eine Schnittstelle (4M) zum Empfangen (EM) externer Steuerbefehle (ESB) bezüglich auszuführender ortsgebundenen und nicht-ortsgebundenen Regel- und Systemaufgaben (ORS, NORS) und eine Mastersteuereinheit (7M) zum Speichern (S) und Ausführen (AO, ANO) der externen Steuerbefehle (ESB) umfasst,
**dadurch gekennzeichnet,**
**dass** die Energiespeicheranlage (1) mit mehreren Netzanschlüssen (1 N) zumindest für einen Anschluss an ein nicht-lokales Stromnetz (5) zur Ausführung nicht-ortsgebundener Regel- und Systemaufgaben (NORS) wie beispielsweise eine Bereitstellung von primärer und sekundärer Regelleistung oder eine Unterstützung eines Schwarzstartes, eine allgemeine Speicherung von Leistungsspitzen oder eine Blindleistungskompensation im nicht-lokalen Stromnetz (5) als ein öffentliches Stromnetz und für einen Anschluss an ein oder mehrere lokale Stromnetze (61, 62) als räumlich begrenzte Stromnetze umfassend betriebsinterne Stromnetze oder ein Stromnetz innerhalb eines Hauses oder Gebäudekomplexes zur Ausführung ortsgebundener Regel- und Systemaufgaben (ORS) zur Verbesserung der lokalen Netzqualität in dem oder den lokalen Stromnetzen (61, 62) mittels Aufnahme (En) und Abgabe (Ep) von Energie aus/an das oder die angeschlossenen Stromnetze (5, 61, 62) ausgestaltet ist und die Mastersteuereinheit (7M) dazu vorgesehen ist, zum Ausführen (AO, ANO) der externen Steuerbefehle (ESB) über die Modulspeicherkapazitäten (MSK) und Modulleistungen (ML) aller mit ihr verbundenen Energiespeichermodule (2M, 2S) zu verfügen und die nicht-ortsgebundenen Regel- und Systemaufgaben (NORS) nur im Rahmen der freien Anteile (SKg, Lg) der Anlagenspeicherkapazitäten (SK) und Anlagenleistung (L) auszuführen (ANO), die nicht für die ortsgebundenen Regel- und Systemaufgaben (ORS) benötigt werden, wobei die Mastersteuereinheit (7M) bei einem gestörten Empfang (EM) der externen Steuerbefehle (ESB) dazu vorgesehen ist, über die Modulspeicherkapazitäten (MSK) und Modulleistungen (ML) aller mit ihr verbundenen Energiespeichermodule (2M, 2S) ausschließlich zur Ausführung (AO) der Steuerbefehle (ESB) bezüglich der auszuführenden ortsgebundenen Regel- und Systemaufgaben (ORS) in dem oder den angeschlossenen lokalen Stromnetzen (61, 62) zu verfügen, bis der Empfang (EM) externer Steuerbefehle (ESB) wieder hergestellt ist.

2. Die Energiespeicheranlage (1) nach Anspruch 1,
**dadurch gekennzeichnet,**
**dass** die Netzanschlüsse (1 N) des Mastermoduls (2M) und der Slave-Module (2S) einen gemeinsamen Aufschaltpunkt (9) zum Anschluss an das oder die Stromnetze (5, 61, 62) besitzen.

3. Die Energiespeicheranlage (1) nach Anspruch 1 oder 2, **dadurch gekennzeichnet, dass** zumindest die Mastersteuereinheit (7M) ein Prioritätenmanagement (71) zum Ausführen (AO, ANO) der einzelnen externen Steuerbefehle (ESB) umfasst, wobei die Ausführung (AO) der externen Steuerbefehle (ESB) bezüglich ortsgebundener Regel- und Systemaufgaben (ORS) in dem oder den lokalen Stromnetzen (61, 62) Vorrang vor der Ausführung (ANO) der externen Steuerbefehle (ESB) bezüglich nicht-ortsgebundener Regel- und Systemaufgaben (ORS) in dem nicht-lokalen Stromnetz (5) besitzt.

4. Die Energiespeicheranlage (1) nach einem der vorstehenden Ansprüche,
**dadurch gekennzeichnet,**
**dass** das Mastermodul (2M) eine erste Prüfeinheit (10) umfasst, die dazu vorgesehen ist, die empfangenen externen Steuerbefehle (ESB) auf Plausibilität und/oder Herkunft zu überprüfen und der Mastersteuereinheit (7M) ein positives (PP) oder negatives (NP) erstes Prüfergebnis (PE1) zu übermitteln, bevor die Mastersteuereinheit (7M) die empfangenen externen Steuerbefehle (ESB) speichert (S).

5. Die Energiespeicheranlage (1) nach einem der vorstehenden Ansprüche,
**dadurch gekennzeichnet,**
**dass** die Slave-Module (2S) jeweils Slave-Steuereinheiten (7S) umfassen, die dazu ausgebildet sind, Betriebszustände (BZ) des jeweiligen Slave-Moduls (2S) zu überwachen und zu steuern und dem Mastermodul (2M) Betriebsdaten (BD) des Slave-Moduls (2S), umfassend die nicht für die ortsgebundenen Regel- und Systemaufgaben (ORS) benötigten Modulspeicherkapazität (MSK) und die Modulleistung (ML) über die Datenleitung (3) zu übermitteln.

6. Die Energiespeicheranlage (1) nach Anspruch 5,
**dadurch gekennzeichnet,**
**dass** das Mastermodul (2M) eine zweite Prüfeinheit (11) umfasst, die dazu vorgesehen ist, die von den Slave-Modulen (2S) übermittelten Betriebsdaten (BD) auf Plausibilität und/oder Herkunft zu überprüfen und der Mastersteuereinheit (7M) ein positives (PP) oder negatives (NP) zweites Prüfergebnis (PE2) zu übermitteln, bevor die Mastersteuereinheit (7M) die übermittelten Betriebsdaten (BD) speichert (S).

7. Die Energiespeicheranlage (1) nach Anspruch 6,
**dadurch gekennzeichnet,**
**dass** die Mastersteuereinheit (7M) dazu vorgesehen ist, bei einem negativen (NP) zweiten Prüfergebnis (PE2) für die übermittelten Betriebsdaten (BD) eines bestimmten Slave-Moduls (2S) dieses Slave-Modul (2S) in einen sicheren Betriebszustand (SB) zu steuern, bevorzugt trennt (TR) die Mastersteuereinheit (7M) die Netzanschlüsse (1 N) dieses Slave-Moduls (2S) von den angeschlossenen Stromnetzen (5, 61, 62), besonders bevorzugt sendet die Mastersteuereinheit (7M) ein Alarmsignal (AS) an die Energiespeicheranlage (1) und/oder nach extern (EX) aus.

8. Die Energiespeicheranlage (1) nach einem der Ansprüche 5 bis 7,
**dadurch gekennzeichnet,**
**dass** das Slave-Modul (2S) ebenfalls eine Schnittstelle (4S) zum Empfangen (EM) externer Steuerbefehle (ESB) bezüglich der auszuführenden ortsgebundenen und nicht-ortsgebundenen Regel- und Systemaufgaben (ORS, NORS) umfasst und die Slave-Steuereinheit (7S) zum Speichern (S) der externen Steuerbefehle (ESB) und zur Steuerung (AO, ANO) der anderen Slave-Module (2S) als neue Mastersteuereinheit (7M-N) bei Ausfall des bisherigen Mastermoduls (2M) oder der bisherigen Mastersteuereinheit (7M) ausgebildet ist.

9. Die Energiespeicheranlage (1) nach einem der Ansprüche 5 bis 8,
**dadurch gekennzeichnet,**
**dass** die Mastersteuereinheit (7M) dazu vorgesehen ist, eine Hierarchiefolge (HF) aufzustellen und diese den Slave-Modulen (2S) zu übermittelt, nach der die Slave-Steuereinheiten (7S) beim Ausfall des bisherigen Mastermoduls (2M) oder der bisherigen Mastersteuereinheit (7M) die Steuerung (AO, ANO) der anderen Slave-Module (2S) übernehmen.

10. Die Energiespeicheranlage (1) nach einem der vorstehenden Ansprüche,
**dadurch gekennzeichnet,**
**dass** zumindest die Mastersteuereinheit (7M) die Datenleitung (3) zu den Slave-Modulen (2) periodisch auf deren Funktionstüchtigkeit mittels eines an die Slave-Module (2S) ausgesendeten so genannten Handschlagsignals (HS) überprüft (U1) und die Slave-Module (2S) dazu vorgesehen sind, aufgrund des empfangenen Handschlagsignals (HS) ein für das jeweilige Slave-Modul (2S) charakteristisches Rücksignal (RS) zur Mastersteuereinheit (7M) zu übermitteln, und die Mastersteuereinheit (7M) dazu vorgesehen ist, aufgrund des empfangenen Rücksignals (RS) die Funktionstüchtigkeit der Datenleitung (3) zu den jeweiligen Slave-Modulen (2S) festzustellen (FT).

11. Die Energiespeicheranlage (1) nach Anspruch 10,
**dadurch gekennzeichnet,**
**dass** das Mastermodul (2M) dazu vorgesehen ist, bei fehlender Funktionstüchtigkeit der Datenleitung (3) zu allen Slave-Modulen (2S) zumindest die Netzanschlüsse (1 N) des Mastermoduls (2M) von den jeweiligen Stromnetzen (5, 61, 62) zu trennen.

12. Die Energiespeicheranlage (1) nach Anspruch 10 oder 11,
**dadurch gekennzeichnet,**
**dass** das Slave-Modul (2S) dazu vorgesehen ist, bei fehlendem Empfang des Handschlagsignals (HS) die Netzanschlüsse (1 N) des Slave-Moduls (2S) von den jeweiligen Stromnetzen (5, 61, 62) zu trennen.

13. Ein Mastermodul (2M), geeignet zur Verwendung in einer Energiespeicheranlage (1) nach Anspruch 1 mit einer Anlagenspeicherkapazitäten (SK) und Anlagenleistung (L), wobei das Mastermodul eine Modulspeicherkapazität (MSK) und eine Modulleistung (ML) besitzt und mit mehreren Netzanschlüssen (1 N) zumindest für einen Anschluss an ein nicht-lokales Stromnetz (5) zur Ausführung nicht-ortsgebundener Regel- und Systemaufgaben (NORS wie beispielsweise eine Bereitstellung von primärer und sekundärer Regelleistung oder eine Unterstützung eines Schwarzstartes, eine allgemeine Speicherung von Leistungsspitzen oder eine Blindleistungskompensation im nicht-lokalen Stromnetz (5) als ein öffentliches Stromnetz und für einen Anschluss an ein oder mehrere lokale Stromnetze (61, 62) als räumlich begrenzte Stromnetze umfassend betriebsinterne Stromnetze oder ein Stromnetz innerhalb eines Hauses oder Gebäudekomplexes zur Ausführung ortsgebundener Regel- und Systemaufgaben (ORS) zur Verbesserung der lokalen Netzqualität in dem oder den lokalen Stromnetzen (61, 62) mittels Aufnahme (En) und Abgabe (Ep) von Energie aus/an das oder die angeschlossenen Stromnetze (5, 61, 62) ausgestaltet ist, eine Schnittstelle (4M) zum Empfangen (EM) externer Steuerbefehle (ESB) bezüglich der auszuführenden ortsgebundenen und nicht-ortsgebundenen Regel- und Systemaufgaben (ORS, NORS) umfasst und dazu vorgesehen ist, über eine oder mehrere Datenleitungen (3), vorzugsweise ein Datenbussystem (3), mit anderen Energiespeichermodulen (2S) verbunden zu werden, und eine Mastersteuereinheit (7M) zum Speichern und Ausführen der externen Steuerbefehle (ESB) umfasst, die dazu vorgesehen ist, zum Ausführen (AO, ANO) der externen Steuerbefehle über die Modulspeicherkapazitäten (MSK) und Modulleistungen (ML) aller mit ihr verbundenen Energiespeichermodule (2M, 2S) zu verfügen und die nicht-ortsgebundenen Regel- und Systemaufgaben (NORS) nur im Rahmen der freien Anteile (SKg, Lg) der Anlagenspeicherkapazitäten (SK) und Anlagenleistung (L) auszuführen (ANO), die nicht für die ortsgebundenen Regel- und Systemaufgaben (ORS) benötigt werden, wobei die Mastersteuereinheit (7M) bei einem gestörten Empfang (EM) der externen Steuerbefehle (ESB) dazu vorgesehen ist, über die Modulspeicherkapazitäten (MSK) und Modulleistungen (ML) aller mit ihr verbundenen Energiespeichermodule (2M, 2S) ausschließlich zur Ausführung (AO) der Steuerbefehle (ESB) bezüglich der auszuführenden ortsgebundenen Regel- und Systemaufgaben (ORS) in dem oder den angeschlossenen lokalen Stromnetzen (61, 62) zu verfügen, bis der Empfang (EM) externer Steuerbefehle (ESB) wieder hergestellt ist.

14. Ein Verfahren zum Betreiben einer Energiespeicheranlage (1) gemäß Anspruch 1 mit einer Anlagenspeicherkapazitäten (SK) und Anlagenleistung (L) und mit mehreren über eine oder mehrere Datenleitungen (3), vorzugsweise ein Datenbussystem (3), verbundenen Energiespeichermodulen (2M, 2S) mit jeweils einer Modulspeicherkapazität (MSK) und einer Modulleistung (ML), die jeweils mit mehreren Netzanschlüssen (1 N) zum Anschluss an mehrere Stromnetze (5, 61, 62) ausgestattet sind, umfassend die Schritte:
- Anschließen (A1N) der jeweiligen Energiespeichermodule (2M, 2S), umfassend ein Mastermodul (2M) und ein oder mehrere Slave-Module (2S) an ein nicht-lokales Stromnetz (5) zur Ausführung nicht-ortsgebundener Regel- und Systemaufgaben (NORS) wie beispielsweise eine Bereitstellung von primärer und sekundärer Regelleistung oder eine Unterstützung eines Schwarzstartes, eine allgemeine Speicherung von Leistungsspitzen oder eine Blindleistungskompensation im nicht-lokalen Stromnetz (5) als ein öffentliches Stromnetz und an ein oder mehrere lokale Stromnetze (61, 62) als räumlich begrenzte Stromnetze umfassend betriebsinterne Stromnetze oder ein Stromnetz innerhalb eines Hauses oder Gebäudekomplexes zur Ausführung ortsgebundener Regel- und Systemaufgaben (ORS) zur Verbesserung der lokalen Netzqualität in dem oder den lokalen Stromnetzen (61, 62) mittels Aufnahme (En) und Abgabe (Ep) von Energie aus/an das oder die angeschlossenen Stromnetze (5, 61, 62),
- Empfangen (EM) externer Steuerbefehle (ESB) bezüglich der auszuführenden ortsgebundenen und nicht-ortsgebundenen Regel- und Systemaufgaben (ORS, NORS) mittels einer entsprechend ausgebildeten Schnittstelle (4M) des Mastermoduls (2M),
- Speichern (S) und Ausführen (AO, ANO) der externen Steuerbefehle (ESB) mittels einer Mastersteuereinheit (7M) des Mastermoduls (2M), wobei die Mastersteuereinheit (7M) zum Ausführen (AO, ANO) der externen Steuerbefehle (ESB) über die Modulspeicherkapazitäten (MSK) und Modulleistungen (ML) aller mit ihr verbundenen Energiespeichermodule (2M, 2S) verfügt,
- Ausführen (ANO) der nicht-ortsgebundenen Regel- und Systemaufgaben (NORS) nur im Rahmen der freien Anteile (SKg, Lg) der Anlagenspeicherkapazitäten (SK) und Anlagenleistung (L), die nicht für die ortsgebundenen Regel- und Systemaufgaben (ORS) benötigt werden, wobei die Mastersteuereinheit (7M) bei einem gestörten Empfang (EM) der externen Steuerbefehle (ESB) dazu vorgesehen ist,
über die Modulspeicherkapazitäten (MSK) und Modulleistungen (ML) aller mit ihr verbundenen Energiespeichermodule (2M, 2S) ausschließlich zur Ausführung (AO) der Steuerbefehle (ESB) bezüglich der auszuführenden ortsgebundenen Regel- und Systemaufgaben (ORS) in dem oder den angeschlossenen lokalen Stromnetzen (61, 62) zu verfügen, bis der Empfang (EM) externer Steuerbefehle (ESB) wieder hergestellt ist.

## Claims

1. An energy storage system (1) having a system storage capacity (SK) and a system output (L) and having a plurality of energy storage modules (2M, 2S) each having a module storage capacity (MSK) and a module output (ML), which are connected to each other via one or a plurality of data lines (3), preferably via a data bus system, wherein one of the energy storage modules (2M, 2S) is provided as master module (2M) and the other energy storage modules (2S) are provided as slave modules (2S) and the master module (2M) is designed for the overall control of all energy storage modules (2M, 2S) connected to the data line (3) and at least the master module (2M) comprises at least one interface (4M) for receiving (EM) external control commands (ESB) regarding the localized and non-localized control and system tasks (ORS; NORS) to be carried out and a master control unit (7M) for storing (S) and carrying out (AO, ANO) the external control commands (ESB),
**characterized in that**
the energy storage system (1) having a plurality of power connections (1 N) is designed as a public power supply system at least for connection to a non-local power supply system (5) for carrying out non-localized control and system tasks (NORS), such as provision of primary and secondary reserve power or support of a black start, general storage of power peaks, or reactive power compensation in the non-local power supply system (5), and, for connection to one or a plurality of local power supply systems (61, 62), as power supply systems that are limited in space and comprise inhouse power supply systems or a power supply system inside a building or a complex of buildings to carry out localized control and system tasks (ORS) to improve the local grid quality in the local power supply system(s) (61, 62) by collecting (En) and releasing (Ep) energy from/to the connected power supply system(s) (5, 61, 62), and that the master control unit (7M) is provided to have available the module storage capacities (MSK) and module outputs (ML) of all energy storage modules (2M, 2S) connected to it in order to carry out (AO, ANO) the external control commands (ESB) and to carry out the non-localized control and system tasks (NORS) only within the scope of the free contents (SKg, Lg) of the system storage capacities (SK) and system outputs (L) which are not required for the localized control and system tasks (ORS), wherein, in the event of disturbed reception (EM) of the external control commands (ESB), the master control unit (7M) is provided to have available the module storage capacities (MSK) and module outputs (ML) of all energy storage modules (2M, 2S) connected to it in order to exclusively carry out (AO) the control commands (ESB) regarding the localized control and system tasks (ORS) to be carried out in the connected local power supply system(s) (61, 62) until the reception (EM) of the external control commands (ESB) has been reestablished.

2. The energy storage system (1) according to Claim 1,
**characterized in that**
the power connections (1 N) of the master module (2M) and the slave modules (2S) have a common connection point (9) for connection to the power supply system(s) (5, 61, 62).

3. The energy storage system (1) according to Claim 1 or 2, **characterized in that** at least the master control unit (7M) comprises a priority management unit (71) for carrying out (AO, ANO) the individual external control commands (ESB), wherein carrying out (AO) the external control commands (ESB) regarding localized control and system tasks (ORS) in the local power supply system(s) (61, 62) has priority over carrying out (ANO) the external control commands (ESB) regarding non-localized control and system tasks (NORS) in the non-local power supply system (5).

4. The energy storage system (1) according to any one of the preceding claims,
**characterized in that**
the master module (2M) comprises a first test unit (10) which is provided to check the received external control commands (ESB) for plausibility and origin and to transmit to the master control unit (7M) a positive (PP) or negative (NP) first test result (PE1) before the master control unit (7M) stores (S) the received external control commands (ESB).

5. The energy storage system (1) according to any one of the preceding claims, **characterized in that**
the slave modules (2S) each comprise slave control units (7S) which are designed to monitor and control operating states (BZ) of the respective slave module (2S) and to transmit to the master module (2M) operating data (BD) of the slave module (2S) via the data line (3), said operating data (BD) comprising the module storage capacity (MSK) and module output (ML) not required for the localized control and system tasks (ORS).

6. The energy storage system (1) according to Claim 5,
**characterized in that**
the master module (2M) comprises a second test unit (11) which is provided to check the operating data (BD) transmitted by the slave modules (2S) for plausibility and/or origin and to transmit to the master control unit (7M) a positive (PP) or negative (NP) second test result (PE2) before the master control unit (7M) stores (S) the transmitted operating data (BD).

7. The energy storage system (1) according to Claim 6,
**characterized in that**
the master control unit (7M) is provided to switch a specific slave module (2S) into a safe operating state (SB) if the second test result (PE2) for the transmitted operating data (BD) of that slave module (2S) is negative (NP); preferably, the master control unit (7M) disconnects (TR) the power connections (1 N) of this slave module (2S) from the connected power supply systems (5, 61, 62); most preferably, the master control unit (7M) sends out an alarm signal (AS) to the energy storage system (1) and/or to the outside (EX).

8. The energy storage system (1) according to any one of Claims 5 to 7,
**characterized in that**,
the slave module (2S) also comprises an interface (4S) for receiving (EM) external control commands (ESB) regarding the localized and non-localized control and system tasks (ORS, NORS) to be carried out and, in the event of a failure of the present master module (2M) or the present master control unit (7M), the slave control unit (7S) is configured to store (S) the external control commands (ESB) and to control (AO, ANO) the other slave modules (2S) as new master control unit (7M-N).

9. The energy storage system (1) according to any one of Claims 5 to 8,
**characterized in that**,
the master control unit (7M) is provided to establish a hierarchy (HF) according to which the slave control units (7S) assume the task of controlling (AO, ANO) the other slave modules (2S) in the event of a failure of the present master module (2M) or the present master control unit (7M) and to transmit said hierarchy (HF) to the slave modules (2S).

10. The energy storage system (1) according to any one of the preceding claims, **characterized in that**
at least the master control unit (7M) periodically checks (U1) the data line (3) running to the slave modules (2) for their functional efficiency by means of a so-called handshake signal (HS) that is sent to the slave modules (2S), and the slave modules (2S) are provided to transmit to the master control unit (7M) on the basis of the received handshake signal (HS) a return signal (RS) that is characteristic of the respective slave module (2S), and the master control unit (7M) is provided to ascertain (FT) the functional efficiency of the data line (3) running to the respective slave modules (2S) based on the received return signal (RS).

11. The energy storage system (1) according to
Claim 10,
**characterized in that**
the master module (2M) is provided to disconnect at least the power connections (1 N) of the master module (2M) from the respective power supply systems (5, 61, 62) in case the data line (3) running to all slave modules (2S) lacks functional efficiency.

12. The energy storage system (1) according to Claim 10 or 11,
**characterized in that**
the slave module (2S) is provided to disconnect the power connections (1 N) of the slave module (2S) from the respective power supply systems (5, 61, 62) in case the handshake signal (HS) fails to be received.

13. A master module (2M) that is suitable to use an energy storage system (1) according to Claim 1 having a system storage capacity (SK) and a system output (L), wherein the master module has a module storage capacity (MSK) and a module output (ML), and is designed as a public power supply system having a plurality of power connections (1 N) at least for connection to a non-local power supply system (5) for carrying out non-localized control and system tasks (NORS), such as provision of primary and secondary reserve power or support of a black start, general storage of power peaks, or reactive power compensation in the non-local power supply system (5), and, for connection to one or a plurality of local power supply systems (61, 62), as power supply systems that are limited in space and comprise inhouse power supply systems or a power supply system inside a building or a complex of buildings to carry out localized control and system tasks (ORS) to improve the local grid quality in the local power supply system(s) (61, 62) by collecting (En) and releasing (Ep) energy from/to the connected power supply system(s) (5, 61, 62), comprises an interface (4M) for receiving (EM) external control commands (ESB) regarding the localized and non-localized control and system tasks (ORS, NORS) and is provided to be connected to other energy storage modules (2S) via one or a plurality of data lines (3), preferably via a data bus system (3), and comprises a master control unit (7M) for storing and carrying out the external control commands (ESB), said master control unit (7M) being provided to have available the module storage capacities (MSK) and module outputs (ML) of all energy storage modules (2M, 2S) connected to it in order to carry out (AO, ANO) the external control commands (ESB) and to carry out the non-localized control and system tasks (NORS) only within the scope of the free contents (SKg, Lg) of the system storage capacities (SK) and system outputs (L) which are not required for the localized control and system tasks (ORS), wherein, in the event of disturbed reception (EM) of the external control commands (ESB), the master control unit (7M) is provided to have available the module storage capacities (MSK) and module outputs (ML) of all energy storage modules (2M, 2S) connected to it in order to exclusively carry out (AO) the control commands (ESB) regarding the localized control and system tasks (ORS) to be carried out in the connected local power supply system(s) (61, 62) until the receipt (EM) of the external control commands (ESB) has been reestablished.

14. A method for operating an energy storage system (1) according to Claim 1, having a system storage capacity (SK) and system output (L) and having a plurality of energy storage modules (2M, 2S) that are connected via one or a plurality of data lines (3), preferably via a data bus system (3), said energy storage modules (2M, 2S) each having a module storage capacity (MSK) and a module output (ML) and each featuring a plurality of power connections (1 N) for connection to one or a plurality of power supply systems (5, 61, 62), comprising the following steps:
- connecting (A1N) the respective energy storage modules (2M, 2S), comprising a master module (2M) and one or a plurality of slave modules (2S), to a non-local power supply system (5) in order to carry out non-localized control and system tasks (NORS), such as provision of primary and secondary reserve power or support of a black start, general storage of power peaks or reactive power compensation in the non-local power supply system (5) as a public power supply system, and to one or a plurality of local power supply systems (61, 62) as power supply systems that are limited in space and comprise inhouse power supply systems or a power supply system inside a building or a complex of buildings to carry out localized control and system tasks (ORS) to improve the local grid quality in the local power supply system(s) (61, 62) by collecting (En) and releasing (Ep) energy from/to the connected power supply system(s) (5, 61, 62),
- receiving (EM) external control commands (ESB) regarding the localized and non-localized control and system tasks (ORS, NORS) to be carried out by means of an appropriately configured interface (4M) of the master module (2M);
- storing (S) and carrying out (AO, ANO) the external control commands (ESB) by means of a master control unit (7M) of the master module (2M), wherein, in order to carry out (AO, ANO) the external control commands (ESB), the master control unit (7M) has available the module storage capacities (MSK) and module outputs (ML) of all of the energy storage modules (2M, 2S) connected to it;
- carrying out (ANO) the non-localized control and system tasks (NORS) only within the scope of the free contents (SKg, Lg) of the system storage capacities (SK) and system outputs (L) which are not required for the localized control and system tasks (ORS), wherein, in the event of disturbed reception (EM) of the external control commands (ESB), the master control unit (7M) is provided to have the module storage capacities (MSK) and module outputs (ML) of all of the energy storage modules (2M, 2S) connected to it only available for carrying out (AO) the control commands (ESB) regarding the localized control and systems tasks (ORS) to be carried out in the connected local power supply system(s) (61, 62) until the reception (EM) of external control commands (ESB) has been restored.

## Revendications

1. Installation de stockage d'énergie (1) avec une capacité de stockage d'installation (SK) et une puissance d'installation (L) et avec plusieurs modules de stockage d'énergie (2M, 2S) ayant chacun une capacité de stockage de module (MSK) et une puissance de module (ML), lesquels sont reliés entre eux via une ou plusieurs lignes de données (3), de préférence un système de bus de données, l'un des modules de stockage d'énergie (2M, 2S) étant prévu en tant que module maître (2M) et les autres modules de stockage d'énergie (2S), en tant que modules esclaves (2S), et le module maître (2M) étant réalisé pour la commande globale de tous les modules de stockage d'énergie (2M, 2S) raccordés à la ligne de données (3), et au moins le module maître (2M) comprenant au moins une interface (4M) pour recevoir (EM) des ordres de commande externes (ESB) relatifs à des tâches régulatrices et systémiques stationnaires et non stationnaires (ORS, NORS) à exécuter, et une unité de commande maître (7M) pour sauvegarder (S) et exécuter (AO, ANO) les ordres de commande externes (ESB),
**caractérisée en ce que**
l'installation de stockage d'énergie (1) comporte plusieurs raccordements réseau (1 N) au moins pour un raccordement à un réseau électrique non local (5) pour l'exécution de tâches régulatrices et systémiques non stationnaires (NORS), telles que, par exemple, une fourniture de puissance de régulation primaire et secondaire ou une aide au démarrage autonome, un stockage général de pics de puissance ou une compensation de la puissance réactive dans le réseau électrique non local (5) en tant que réseau électrique public et pour un raccordement à un ou plusieurs réseaux électriques locaux (61, 62) en tant que réseaux électriques limités dans l'espace, comprenant des réseaux électriques internes ou un réseau électrique dans une maison ou un complexe immobilier pour l'exécution de tâches régulatrices et systémiques stationnaires (ORS) pour améliorer la qualité locale du réseau dans le ou les réseaux électriques locaux (61, 62) par absorption (En) et délivrance (Ep) d'énergie du/au (des/aux) réseau(x) électrique(s) (5, 61, 62) et l'unité de commande maître (7M) étant prévue pour disposer, aux fins de l'exécution (AO, ANO) des ordres de commande externes (ESB), des capacités de stockage de module (MSK) et des puissances de module (ML) de tous les modules de stockage d'énergie (2M, 2S) qui y sont reliés et pour exécuter (ANO) les tâches régulatrices et systémiques non stationnaires (NORS) uniquement dans le cadre des fractions libres (SKg, Lg) de capacité de stockage d'installation (SK) et de la puissance d'installation (L) qui ne sont pas requises pour les tâches régulatrices et systémiques stationnaires (ORS), l'unité de commande maître (7M) étant prévue pour, en cas de réception perturbée (EM) des ordres de commande externes (ESB), disposer des capacités de stockage de module (MSK) et des puissances de module (ML) de tous les modules de stockage d'énergie (2M, 2S) qui y sont reliés uniquement pour exécuter (AO) les ordres de commande (ESB) relatifs aux tâches régulatrices et systémiques stationnaires à exécuter (ORS) dans le ou les réseaux électriques locaux raccordés (61, 62) jusqu'à ce que la réception (EM) d'ordres de commande externes (ESB) soit rétablie.

2. Installation de stockage d'énergie (1) selon la revendication 1,
**caractérisée en ce que**
les raccordements réseau (1 N) du module maître (2M) et des modules esclaves (2S) ont un point de branchement commun (9) pour raccordement au ou aux réseau(x) électrique(s) (5, 61, 62).

3. Installation de stockage d'énergie (1) selon la revendication 1 ou 2, **caractérisée en ce qu'**au moins l'unité de commande maître (7M) comprend une gestion de priorités (71) pour exécuter (AO, ANO) les différents ordres de commande externes (ESB), l'exécution (AO) des ordres de commande externes (ESB) relatifs à des tâches régulatrices et systémiques stationnaires (ORS) dans le ou les réseaux électriques locaux (61, 62) ayant priorité sur l'exécution (ANO) des ordres de commande externes (ESB) relatifs à des tâches régulatrices et systémiques non stationnaires (ORS) dans le réseau électrique non local (5).

4. Installation de stockage d'énergie (1) selon l'une des revendications précédentes,
**caractérisée en ce que**
le module maître (2M) comprend une première unité de contrôle (10) prévue pour vérifier les ordres de commande externes (ESB) reçus quant à la plausibilité et/ou à l'origine et pour transmettre un premier résultat de contrôle (PE1) positif (PP) ou négatif (NP) à l'unité de commande maître (7M) avant que l'unité de commande maître (7M) ne sauvegarde (S) les ordres de commande externes (ESB) reçus.

5. Installation de stockage d'énergie (1) selon l'une des revendications précédentes,
**caractérisée en ce que**
les modules esclaves (2S) comprennent chacun des unités de commande esclaves (7S) qui sont conçues pour surveiller et commander des états de fonctionnement (BZ) du module esclave respectif (2S) et pour transmettre au module maître (2M), via la ligne de données (3), des données opérationnelles (BD) du module esclave (2S), comprenant la capacité de stockage de module (MSK) non requise pour les tâches régulatrices et systémiques stationnaires (ORS) et la puissance de module (ML).

6. Installation de stockage d'énergie (1) selon la revendication 5,
**caractérisée en ce que**
le module maître (2M) comprend une deuxième unité de contrôle (11) qui est prévue pour vérifier les données opérationnelles (BD) transmises par les modules esclaves (2S) quant à leur plausibilité et/ou leur origine et pour transmettre à l'unité de commande maître (7M) un deuxième résultat de contrôle (PE2) positif (PP) ou négatif (NP) avant que l'unité de commande maître (7M) ne sauvegarde (S) les données opérationnelles transmises (BD).

7. Installation de stockage d'énergie (1) selon la revendication 6,
**caractérisée en ce que**
l'unité de commande maître (7M) est prévue pour, en cas de deuxième résultat de contrôle (PE2) négatif (NP) pour les données opérationnelles transmises (BD) d'un module esclave déterminé (2S), faire passer ce module esclave (2S) dans un état de fonctionnement sécurisé (SB), l'unité de commande maître (7M) sépare (TR) préférentiellement les raccordements réseau (1 N) de ce module esclave (2S) des réseaux électriques raccordés (5, 61, 62), l'unité de commande maître (7M) envoie, de manière particulièrement préférentielle, un signal d'alarme (AS) à l'installation de stockage d'énergie (1) et/ou vers l'extérieur (EX).

8. Installation de stockage d'énergie (1) selon l'une des revendications 5 à 7,
**caractérisée en ce que**
le module esclave (2S) comprend également une interface (4S) pour recevoir (EM) des ordres de commande externes (ESB) relatifs aux tâches régulatrices et systémiques stationnaires et non stationnaires (ORS, NORS) à exécuter et l'unité de commande esclave (7S) est conçue pour sauvegarder (S) les ordres de commande externes (ESB) et commander (AO, ANO) les autre modules esclaves (2S) en tant que nouvelle unité de commande maître (7M-N) en cas de défaillance du module maître (2M) de jusqu'alors ou de l'unité de commande maître (7M) de jusqu'alors.

9. Installation de stockage d'énergie (1) selon l'une des revendications 5 à 8,
**caractérisée en ce que**
l'unité de commande maître (7M) est prévue pour établir une suite hiérarchique (HF) et la transmettre aux modules esclaves (2S), suite selon laquelle les unités de commande esclaves (7S) prennent en charge la commande (AO, ANO) des autres modules esclaves (2S) en cas de défaillance du module maître (2M) de jusqu'alors ou de l'unité de commande maître (7M) de jusqu'alors.

10. Installation de stockage d'énergie (1) selon l'une des revendications précédentes,
**caractérisée en ce que**
au moins l'unité de commande maître (7M) vérifie (U1) périodiquement la ligne de données (3) vers les modules esclaves (2) quant à son bon fonctionnement au moyen de ce qu'on appelle un signal de transfert (HS) envoyé aux modules esclaves (2S) et les modules esclaves (2S) sont prévus pour transmettre, sur la base du signal de transfert reçu (HS), un signal de retour (RS) caractéristique du module esclave respectif (2S) à l'unité de commande maître (7M) et l'unité de commande maître (7M) est prévue pour constater (FT), sur la base du signal de retour reçu (RS), le bon fonctionnement de la ligne de données (3) vers les modules esclaves respectifs (2S).

11. Installation de stockage d'énergie (1) selon la revendication 10,
**caractérisée en ce que**
le module maître (2M) est prévu pour séparer, en cas de mauvais fonctionnement de la ligne de données (3) vers tous les modules esclaves (2S), au moins les raccordements réseau (1 N) du module maître (2M) aux réseaux électriques respectifs (5, 61, 62).

12. Installation de stockage d'énergie (1) selon la revendication 10 ou 11,
**caractérisée en ce que**
le module esclave (2S) est prévu pour, en cas de non-réception du signal de transfert (HS), couper les raccordements réseau (1 N) du module esclave (2S) aux réseaux électriques respectifs (5, 61, 62).

13. Module maître (2M) adapté pour être utilisé dans une installation de stockage d'énergie (1) selon la revendication 1, avec une capacité de stockage d'installation (SK) et une puissance d'installation (L), le module maître ayant une capacité de stockage de module (MSK) et une puissance de module (ML) et étant réalisé avec plusieurs raccordements réseau (1 N) au moins pour un raccordement à un réseau électrique non local (5) pour exécuter des tâches régulatrices et systémiques non stationnaires (NORS), telles que, par exemple, une fourniture de puissance de régulation primaire et secondaire ou une aide au démarrage autonome, un stockage général de pics de puissance ou une compensation de la puissance réactive dans le réseau électrique non local (5) en tant que réseau électrique public et pour un raccordement à un ou plusieurs réseaux électriques locaux (61, 62) en tant que réseaux électriques limités dans l'espace, comprenant des réseaux électriques internes ou un réseau électrique dans une maison ou un complexe immobilier pour l'exécution de tâches régulatrices et systémiques stationnaires (ORS) pour améliorer la qualité locale du réseau dans le ou les réseaux électriques locaux (61, 62) par absorption (En) et délivrance (Ep) d'énergie du/au (des/aux) réseau(x) électrique(s) (5, 61, 62), comprenant une interface (4M) pour recevoir (EM) des ordres de commande externes (ESB) relatifs à des tâches régulatrices et systémiques stationnaires et non stationnaires (ORS, NORS) à exécuter, et étant prévu pour être relié à d'autres modules de stockage d'énergie (2S) via une ou plusieurs lignes de données (3), de préférence un système de bus de données (3), et comprenant une unité de commande maître (7M) pour sauvegarder et exécuter les ordres de commande externes (ESB), laquelle est prévue pour disposer, aux fins de l'exécution (AO, ANO) des ordres de commande externes (ESB), des capacités de stockage de module (MSK) et des puissances de module (ML) de tous les modules de stockage d'énergie (2M, 2S) qui y sont reliés et pour exécuter (ANO) les tâches régulatrices et systémiques non stationnaires (NORS) uniquement dans le cadre des fractions libres (SKg, Lg) de capacité de stockage d'installation (SK) et de la puissance d'installation (L) qui ne sont pas requises pour les tâches régulatrices et systémiques stationnaires (ORS), l'unité de commande maître (7M) étant prévue pour, en cas de réception perturbée (EM) des ordres de commande externes (ESB), disposer des capacités de stockage de module (MSK) et des puissances de module (ML) de tous les modules de stockage d'énergie (2M, 2S) qui y sont reliés uniquement pour exécuter (AO) les ordres de commande (ESB) relatifs aux tâches régulatrices et systémiques stationnaires à exécuter (ORS) dans le ou les réseaux électriques locaux raccordés (61, 62) jusqu'à ce que la réception (EM) d'ordres de commande externes (ESB) soit rétablie.

14. Procédé d'exploitation d'une installation de stockage d'énergie (1) selon la revendication 1 avec une capacité de stockage d'installation (SK) et une puissance d'installation (L) et avec plusieurs modules de stockage d'énergie (2M, 2S) ayant chacun une capacité de stockage de module (MSK) et une puissance de module (ML), reliés entre eux via une ou plusieurs lignes de données (3), de préférence un système de bus de données, et qui sont équipés respectivement de plusieurs raccordements réseau (1 N) pour raccordement à plusieurs réseaux électriques (5, 61, 62), comportant les étapes suivantes :
- raccordement (A1N) des modules de stockage d'énergie respectifs (2M, 2S), comprenant un module maître (2M) et un ou plusieurs modules esclaves (2S), à un réseau électrique non local (5) pour exécuter des tâches régulatrices et systémiques non stationnaires (NORS), telles que, par exemple, une fourniture de puissance de régulation primaire et secondaire ou une aide au démarrage autonome, un stockage général de pics de puissance ou une compensation de la puissance réactive dans le réseau électrique non local (5) en tant que réseau électrique public et à un ou plusieurs réseaux électriques locaux (61, 62) en tant que réseaux électriques limités dans l'espace, comprenant des réseaux électriques internes ou un réseau électrique dans une maison ou un complexe immobilier pour l'exécution de tâches régulatrices et systémiques stationnaires (ORS) pour améliorer la qualité locale du réseau dans le ou les réseaux électriques locaux (61, 62) par absorption (En) et délivrance (Ep) d'énergie du/au (des/aux) réseau(x) électrique(s) (5, 61, 62) ;
- réception (EM) d'ordres de commande externes (ESB) relatifs aux tâches régulatrices et systémiques stationnaires et non stationnaires à exécuter (NORS) au moyen d'une interface (4M) du module maitre (2M) réalisée en conséquence ;
- sauvegarde (S) et exécution (AO, ANO) des ordres de commande externes (ESB) au moyen d'une unité de commande maître (7M) du module maître (2M), l'unité de commande maître (7M) disposant, pour exécuter (AO, ANO) les ordres de commande externes (ESB), des capacités de stockage de module (MSK) et des puissances de module (ML) de tous les modules de stockage d'énergie (2M, 2S) qui y sont reliés ;
- exécution (ANO) des tâches régulatrices et systémiques non stationnaires (NORS) uniquement dans le cadre des fractions libres (SKg, Lg) de capacité de stockage d'installation (SK) et de la puissance d'installation (L) qui ne sont pas requises pour les tâches régulatrices et systémiques stationnaires (ORS), l'unité de commande maître (7M) étant prévue pour, en cas de réception perturbée (EM) des ordres de commande externes (ESB), disposer des capacités de stockage de module (MSK) et des puissances de module (ML) de tous les modules de stockage d'énergie (2M, 2S) qui y sont reliés uniquement pour exécuter (AO) les ordres de commande (ESB) relatifs aux tâches régulatrices et systémiques stationnaires à exécuter (ORS) dans le ou les réseaux électriques locaux raccordés (61, 62) jusqu'à ce que la réception (EM) d'ordres de commande externes (ESB) soit rétablie.
